# FASCICULE DE BREVET EUROPEEN

(11) **EP 3 900 219 B1**
(45) Date de publication et mention de la délivrance du brevet: **17.01.2024**
(21) Numéro de dépôt: 19817758.6
(22) Date de dépôt: 16.12.2019
(51) Int. Cl.: H04B 7/155, H04B 1/38

(54) **PROCÉDÉ POUR FOURNIR UNE CONNECTIVITÉ RADIOMOBILE DANS UN ESPACE CONFINÉ PAR UNE ANTENNE DE TÉLÉVISION EXTÉRIEURE ET SYSTÈME ASSOCIÉ**
VERFAHREN UM EINE MOBILFUNKVERBINBUNG IN EINEM GESCHLOSSENEN RAUM DURCH EINE EXTERNE FERNSEHANTENNE BEREITZUSTELLEN UND ENTSPRECHENDE VORRICHTUNG
METHOD FOR PROVIDING A MOBILE RADIO CONNECTION WITHIN AN ENCLOSED SPACE BY MEANS OF AN EXTERNAL TELEVISION ANTENNA AND RELATED SYSTEM

(30) Priorité: 21.12.2018 FR 1873768
(43) Date de publication de la demande: 27.10.2021
(73) Titulaire: Institut Mines Telecom, 91120 Palaiseau (FR)
(72) Inventeur: IELLAMO, Stefano, 75014 PARIS (FR)
(74) Mandataire: Gevers & Orès
(86) Numéro de dépôt international: PCT/EP2019/085402
(87) Numéro de publication internationale: WO 2020/127084

(56) Documents cités:
- EP-A1- 1 865 621
- EP-A1- 2 063 549
- US-A1- 2002 059 615
- US-A1- 2005 030 915

## Description

### Domaine technique de l'invention

L'invention concerne un procédé pour fournir une connectivité radio-mobile à l'intérieur d'un espace contraint, tel qu'un bâtiment ou une maison.

L'invention trouve une application privilégiée pour permettre à des terminaux mobiles se trouvant au sein d'espaces confinés ou contraints, de communiquer avec des réseaux radio-mobiles extérieurs, notamment de type 4G (4^{ème} Génération) selon le standard LTE (*Long Term Evolution* en anglais) et/ou 5G (5^{ème} Génération).

En particulier, l'invention peut fonctionner simultanément avec des stations de base 4G-LTE et des stations de base SG-NR (*New Radio* en anglais) selon le mode de connectivité duale (*UTRA-NR Dual Connectivity* en anglais) tel que défini dans la norme 3GPP.

Toutefois, l'invention ne s'applique pas uniquement à des réseaux de type 4G et/ou 5G mais plus généralement, à tout type de réseau radio-mobile opérant dans des domaines des fréquences UHF (*Ultra High Frequency* en anglais). Ces fréquences dites "ultra hautes" sont généralement comprises entre 300 MHz et 3 GHz, en particulier entre 300 MHz et 1 GHz et plus particulièrement entre 450 MHz et 960 MHz.

Par la suite, le terme *terminal* désignera tout dispositif communicant - tel qu'un ordinateur PC (*Personal Computer* en anglais), un téléphone portable ou un téléphone intelligent (*smartphone* en anglais), une tablette ou tout type d'objet connecté - compatible avec la norme ou le standard de communication 4G-LTE et/ou SG-NR (*New Radio* en anglais) et/ou Wi-Fi.

On comprend qu'un espace dispose d'une *connectivité* radio-mobile, lorsqu'il présente un niveau de couverture radiofréquence suffisant pour permettre à un terminal d'accéder à un réseau de communication radio-mobile.

La *couverture* radiofréquence est estimée notamment en fonction de la puissance moyenne radiofréquence du signal reçu à la fréquence de travail, exprimée en dBm, par rapport à un seuil de référence.

Selon les données statistiques des opérateurs radio-mobiles, environ 80% du trafic de données mobiles est actuellement consommé à l'intérieur de bâtiments (*e.g*. logements, bureaux, centres commerciaux, gares, *etc*)*.* Or, la qualité des signaux radio-mobiles reçus par les terminaux mobiles à l'intérieur de ces espaces contraints ou confinés peut être fortement dégradée, notamment en raison de l'atténuation ou de la réflexion des ondes radiofréquences occasionnée par la structure même des bâtiments.

En raison d'une pénétration de ces signaux radio-mobiles difficile voire inexistante à l'intérieur des bâtiments, l'espace intérieur ne dispose pas d'une couverture radiofréquence susceptible de fournir un accès à un réseau de communication radio-mobile (*i.e.* absence de connectivité radio-mobile).

Dans le cas où l'accès au réseau radio-mobile est possible, la connectivité reste souvent très insatisfaisante (*i.e.* taux d'accessibilité trop faible), dans le sens où elle ne permet pas à un utilisateur d'un terminal de communiquer dans de bonnes conditions (*e.g*. téléchargement de données, communication audio/vidéo en temps réel).

Documents relevants de l'art antérieur sont: EP-A-1865621, EP-A-2063549, US2002/059615 et US2005/030915.

### Arrière-plan technique

Cette situation pousse les opérateurs radio-mobiles à augmenter les puissances d'émission des signaux radio-mobiles émis par les stations de base (*base stations* en anglais) des réseaux radio-mobiles et/ou à augmenter la densité de stations de base déployées.

Toutefois, cette approche est désavantageuse, dans la mesure où les modifications apportées aux réseaux sont coûteuses et qu'elles contribuent à augmenter leur complexité et leur consommation énergétique (*e.g*. installation de nouveaux équipements à alimenter et à entretenir).

Par ailleurs, cette approche n'est pas souhaitable car elle contribue à augmenter le niveau de pollution électromagnétique ainsi que l'exposition des utilisateurs aux ondes électromagnétiques, notamment à proximité des stations de base.

Au vu de ces différents inconvénients, des systèmes de communication radiofréquences dits *petites cellules et relais radio* ont été proposés. Cette approche consiste à distribuer des répéteurs ou relais radiofréquences à faibles puissances radio à l'intérieur des bâtiments, de manière à augmenter la densité de cellules de couverture.

Sur le marché, il existe aussi des systèmes femto-cellulaires ou pico-cellulaires configurés pour ajuster de manière dynamique la puissance et la fréquence des signaux émis à destination des terminaux mobiles.

Toutefois, de tels systèmes ne sont pas satisfaisants notamment pour les raisons suivantes.

Sur le plan des performances, le gain apporté par ces systèmes en termes de débits de transmission reste faible et la gestion des interférences reste difficile à mettre en oeuvre.

Sur le plan énergétique, l'alimentation électrique de l'ensemble des relais pico-cellulaires ou femto-cellulaires peut rendre le système très énergivore, malgré la mise en oeuvre de mécanisme de mise en veille des cellules inactives.

Enfin, l'installation et le maintien des relais sont très contraignants pour les opérateurs radio-mobiles.

Par ailleurs, les opérateurs radio-mobiles ont été amenés à faire l'acquisition de licences pour exploiter des bandes de fréquences inférieures au GHz, de manière à fournir une couverture de base à l'intérieur des bâtiments. Toutefois, l'acquisition de telles bandes de fréquences se négocie actuellement à des prix prohibitifs.

### Résumé de l'invention

Un objectif de l'invention est de pallier à l'un au moins des inconvénients précités.

Ça est réalisé par un procédé selon la revendication 1 et un système selon la revendication 12.

A cet effet, l'invention propose un procédé de communication entre au moins une station de base d'un réseau radio-mobile, de préférence de type LTE et/ou 5G, et au moins un terminal situé dans un espace confiné, ledit procédé comprenant les étapes suivantes: a) réception par au moins une antenne de télévision extérieure audit espace confiné, dans une bande de fréquences UHF, notamment comprises entre 450 MHz et 960 MHz, d'une pluralité de signaux radiofréquences comprenant d'une part, au moins un signal radio-mobile émis par ladite au moins une station de base du réseau radio-mobile, de préférence conformément au standard LTE et/ou 5G, et comprenant d'autre part un signal de télévision; b) transmission de ladite pluralité de signaux radiofréquences, par un lien de communication filaire, entre ladite au moins une antenne de télévision extérieure et un module de traitement des signaux radiofréquences, ce module de traitement étant situé à l'intérieur dudit espace confiné, c) extraction par le module de traitement dudit au moins un signal radio-mobile; d) diffusion à l'intérieur de l'espace confiné dudit au moins un signal radio-mobile extrait par le module de traitement et e) réception par le terminal dudit signal diffusé.

Sur le lien descendant (*i.e.* de la station de base vers le terminal), la diffusion du signal radio-mobile reçu de la station de base par l'intermédiaire de ladite au moins une antenne extérieure par le module de traitement permet avantageusement d'améliorer la connectivité au réseau radio-mobile pour un terminal situé à l'intérieur de l'espace confiné. De préférence, une connectivité de type LTE et/ou 5G peut être avantageusement fournie à un terminal se trouvant à l'intérieur de l'espace confiné.

Selon une particularité de l'invention, le procédé comprend en outre, entre l'étape c) et l'étape d), une étape de transposition de fréquence, selon laquelle ledit au moins un signal radio-mobile extrait est transposé sur une fréquence différente de celle à laquelle ledit signal radio-mobile a été reçu, de manière à fournir au moins un signal transposé en fréquence, ladite étape de transposition étant effectuée par ledit module de traitement.

La conversion de fréquence permet avantageusement de transposer le signal radio-mobile dans une autre bande de fréquences, par exemple parmi les bandes de fréquences allouées aux transmissions 4G/5G.

Selon une autre particularité de l'invention, le procédé comprend en outre, entre l'étape c) et l'étape d), une étape de conversion, lors de laquelle ledit au moins un signal radio-mobile extrait est converti selon un standard spécifique de manière à fournir au moins un signal converti, l'étape de conversion étant effectuée par le module de traitement.

De cette manière, la couverture radio peut être adaptée selon les préférences et/ou les capacités de communication du terminal situé dans l'espace confiné. En particulier, une couverture sans fil, par exemple de type Wi-Fi, plus adaptée aux communications en intérieur peut être avantageusement fournie au terminal à partir des signaux radio-mobiles 4G/5G reçus selon le standard 4G/5G via ladite au moins une antenne de télévision extérieure.

Selon une autre particularité de l'invention, le procédé comprend en outre, entre l'étape c) et l'étape d), une étape d'amplification, lors de laquelle ledit au moins un signal radio-mobile extrait est amplifié par le module de traitement.

Selon une autre particularité de l'invention, le procédé comprend en outre les étapes suivantes : e) une étape d'émission d'un signal radio-mobile par le terminal à destination d'au moins une station de base du réseau radio-mobile, f) une étape de réception par la station de base du signal radiofréquence émis par le terminal.

Selon une autre particularité de l'invention, le procédé comprend en outre : g) une étape d'interception par le module de traitement d'un signal radiofréquence émis par le terminal; h) une étape d'émission par ledit module de traitement, d'un signal radiofréquence obtenu à partir du signal radiofréquence reçu du terminal, à destination de ladite au moins une station de base du réseau radio-mobile ; et i) une étape de réception, par la station de base du signal radiofréquence émis par le module de traitement.

Selon une autre particularité de l'invention, le procédé comprend en outre, entre l'étape g) et l'étape h), une étape d'amplification, lors de laquelle le signal radiofréquence reçu est amplifié par le module de traitement.

Selon une autre particularité de l'invention, le procédé comprend en outre, entre l'étape g) et l'étape h), une étape de transposition de fréquence, lors de laquelle le signal radiofréquence reçu est transposé sur une fréquence différente de celle à laquelle le signal radiofréquence a été reçu, l'étape de transposition étant effectuée par le module de traitement.

Selon une autre particularité de l'invention, le procédé comprend en outre une étape de conversion, lors de laquelle, le signal radiofréquence reçu est converti par le module de traitement selon le standard LTE et/ou 5G.

Selon une autre particularité de l'invention, la fréquence à laquelle ledit au moins un signal est transposé est allouée de manière dynamique par le module de traitement.

Selon une autre particularité de l'invention, l'amplification est réalisée de manière dynamique par le module de traitement.

L'invention vise également un système pour la mise en oeuvre du procédé tel que décrit ci-avant, le système comprenant: - au moins une station de base d'un réseau radio-mobile, ladite au moins une station de base étant apte à émettre et/ou recevoir des signaux radio-mobiles ; - au moins une antenne de télévision extérieure à un espace confiné, ladite au moins une antenne étant apte à recevoir des signaux radiofréquences dans une bande de fréquences UHF, notamment comprises entre 450 MHz et 960 MHz;
- un module de traitement des signaux radiofréquences, le module de traitement étant installé dans l'espace confiné et comportant un moyen d'extraction adapté pour extraire au moins un signal radio-mobile parmi les signaux radiofréquences de ladite bande de fréquences ainsi qu'une antenne apte à émettre et/ou recevoir un signal radiofréquence ;
- un lien de communication filaire reliant l'antenne de télévision extérieure audit module de traitement ; - au moins un terminal apte à recevoir et/ou émettre au moins un signal radiofréquence depuis ou vers ledit module de traitement, ledit au moins un terminal étant situé dans l'espace confiné.

Selon une particularité de l'invention, le moyen d'extraction adapté pour extraire au moins un signal radio-mobile parmi les signaux radiofréquences de ladite bande de fréquences est choisi parmi : au moins un diplexeur, un triplexeur, un quadriplexeur ou une combinaison de ceux-ci.

Selon une particularité de l'invention, le moyen d'extraction est un diplexeur.

Selon une particularité de l'invention, le moyen d'extraction comprend: - un étage de séparation incluant un port d'entrée et n ports de sortie, ledit étage de séparation étant configuré pour répartir fréquentiellement les signaux reçus de l'antenne extérieure sur les ports de sortie; - un étage de combinaison comprenant au moins un composant incluant m<n ports d'entrée et un port de sortie, chaque port d'entrée dudit au moins un composant étant relié à un port de sortie distinct de l'étage de séparation de manière à combiner fréquentiellement plusieurs signaux reçus de l'antenne extérieur sur un même port de sortie de l'étage de combinaison.

Selon une particularité de l'invention, l'étage de séparation comprend un triplexeur et l'étage de combinaison comprend un diplexeur.

Selon une particularité de l'invention, l'étage de séparation comprend un quadriplexeur 1 :4 et l'étage de combinaison comprend deux diplexeurs 2 :1.

Selon une particularité de l'invention, le module de traitement comprend au moins un amplificateur de puissance et/ou au moins un amplificateur à faible bruit adapté pour amplifier le signal radio-mobile reçu d'au moins une desdites stations de base.

Selon une particularité de l'invention, le module de traitement comprend des moyens de transposition de fréquence adaptés à fournir au moins un signal transposé en fréquence à partir dudit signal radio-mobile reçu d'au moins une desdites stations de base.

Selon une particularité de l'invention, le module de traitement comprend en outre des moyens de traitement de signal configurés pour convertir le signal radio-mobile reçu d'au moins une desdites stations de base selon un standard donné.

Selon une particularité de l'invention, le module de traitement est mis en oeuvre au moins en partie selon une technologie de type radio-logicielle.

Ainsi, dans le cadre de l'invention, on propose d'exploiter les antennes de télévision existantes initialement destinées à la réception de signaux de télévision dans les bandes de fréquences UHF (*Ultra High Frequency*) pour la réception de signaux radio-mobiles notamment de type LTE et/ou de type 5G dans une bande de fréquences comprises entre 450 et 960 MHz.

Actuellement, la bande de fréquences n°8 LTE/5G atteint la fréquence maximale de 960 MHz. La plus basse fréquence LTE est de 450 MHz tandis que la plus basse fréquence commune aux standards LTE et 5G est de 617 MHz dans la bande de fréquences n°71. On notera que les fréquences opérationnelles selon le standard 5G dans le domaine de fréquences FR1 (*Frequency Range 1*) constituent un sous-ensemble des fréquences utilisées selon le standard LTE. Toutefois, d'autres bandes de fréquences opérationnelles avec des bandes passantes de canaux spécifiques pourront être utilisées conformément aux futures publications du 3GPP (*3^{rd} Génération Partnership Project*), par exemple selon les spécifications techniques 3GPP TS 38.101-1.

En particulier, il s'agit d'utiliser au moins une antenne de télévision extérieure sur le toit d'un bâtiment pour recevoir les signaux LTE et/ou 5G émis d'une station de base à destination des terminaux mobiles situés à l'intérieur du bâtiment.

### Brève description des figures

D'autres particularités et avantages de l'invention apparaîtront encore dans la description ci-après, en relation avec les dessins annexés, donnés à titre d'exemples non limitatifs.
[Fig. 1] La **figure 1** illustre un exemple de réalisation du système selon l'invention pour une communication bi-directionnelle entre des stations de base et un terminal situé à l'intérieur d'un bâtiment.
[Fig. 2] La **figure 2** illustre un diplexeur servant de moyen d'extraction d'au moins un signal radio-mobile selon une première variante de réalisation.
[Fig. 3] La **figure 3** illustre un exemple de moyen d'extraction d'au moins un signal radio-mobile selon une deuxième variante de réalisation.
[Fig. 4] La **figure 4** illustre un exemple de moyen d'extraction d'au moins un signal radio-mobile selon une troisième variante de réalisation.
[Fig. 5] La **figure 5** illustre un exemple généralisé de moyen d'extraction d'au moins un signal radio-mobile selon la troisième variante de réalisation.
[Fig. 6a-6c] Les **figures 6a à 6c** illustrent sous la forme de bloc-diagrammes schématiques un dispositif de traitement selon trois modes de réalisation de l'invention pour une communication sur le lien descendant.
[Fig. 7a-7c] Les **figures 7a à 7c** illustrent de manière schématique le procédé de communication selon trois modes de réalisation de l'invention pour une communication sur le lien descendant.
[Fig. 8] La **figure 8** illustre de manière schématique un mode de réalisation particulier du procédé de communication pour une communication sur le lien montant.
[Fig. 9] La **figure 9** illustre de manière schématique un premier exemple de réalisation du module de traitement selon l'invention.
[Fig. 10] La **figure 10** illustre de manière schématique un deuxième exemple de réalisation du module de traitement selon l'invention.
[Fig. 11] La **figure 11** illustre de manière schématique un troisième exemple de réalisation du module de traitement selon l'invention.
[Fig. 12] La **figure 12** illustre de manière schématique un mode de réalisation du système selon l'invention comprenant une antenne extérieure dédiée à la réception de signaux radio-mobiles.

### Description détaillée de l'invention

Selon le principe général de l'invention, il s'agit d'exploiter des antennes de télévision sur le toit d'immeubles, bâtiments ou maisons pour améliorer la couverture radio-mobile à l'intérieur des bâtiments.

Il s'agit d'améliorer la connectivité radio-mobile, notamment de type 4G et/ou 5G, dans des bandes de fréquences UHF, en particulier comprises entre 450 MHz et 960 MHz, et ainsi de contribuer à fournir des accès à Internet à très haut débit sans fil à l'intérieur des bâtiments avec des performances améliorées par rapport à celles que fournissent les solutions de l'état de l'art précédemment décrites.

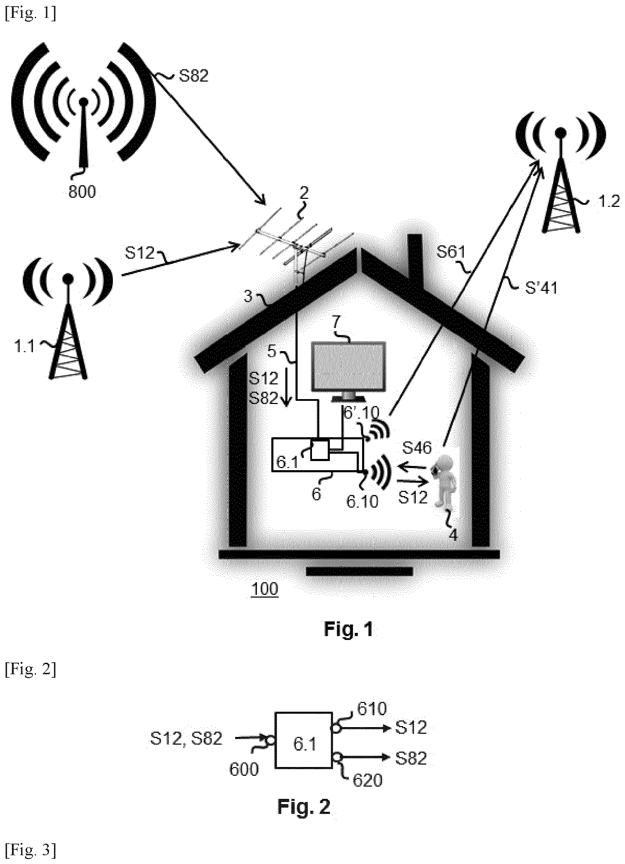

Comme illustré à la **figure 1****,** le système 100 pour la mise en oeuvre du procédé de communication selon l'invention comprend une pluralité de stations de base 1.1, 1.2 appartenant à un même réseau radio-mobile. Chaque station de base est apte à émettre et/ou recevoir des signaux radio-mobiles, en particulier conformément au standard LTE et/ou 5G.

Les stations de base considérées dans le présent mode de réalisation sont fixes. Toutefois, dans des modes de réalisation alternatifs, la ou les stations de base pourront être mobiles de manière à maximiser le potentiel de la présente invention. Par exemple, elles pourront être embarquées sur un véhicule (UAV: *Unmanned Aerial Vehicle*)*,* tel qu'un drone, le drone servant de station de base pourra se déplacer de manière à optimiser les conditions de réception d'un signal radio-mobile selon le principe de l'invention.

Le système 100 comprend en outre une antenne de télévision 2 dite antenne TV. Cette antenne est dite *extérieure* par rapport à un espace confiné, tel qu'un espace intérieur d'une maison 3, où la connectivité LTE et/ou 5G est supposée être faible voire inexistante. Un terminal 4 souhaitant communiquer avec les stations de base 1.1, 1.2 se situe dans cet espace intérieur.

Selon la figure 1, deux stations de base 1.1, 1.2 ont été considérées. A titre d'exemple, on suppose que la première station de base 1.1 est la plus proche du terminal 4, dans la direction selon laquelle pointe l'antenne de télévision extérieure 2, de manière à recevoir un signal radio-mobile S12. On peut également supposer que la deuxième station de base 1.2 est la plus proche du terminal 4 mais qu'elle n'est pas située dans le rayon de visibilité de l'antenne extérieure de télévision 2, de sorte que l'antenne ne reçoit pas de signal radio-mobile en provenance de cette deuxième station de base 1.2. Toutefois, dans d'autres cas de figures, on pourra considérer qu'une seule station de base suffit si celle-ci est suffisamment proche pour recevoir un signal émis sur le lien montant dans le cas d'une communication bi-directionnelle.

Par exemple, l'antenne extérieure 2 est préalablement installée sur le toit de la maison 3, de manière à recevoir des signaux de télévision S82 émis par une station de télévision émettrice 800.

De manière connue, la bande passante de l'antenne de télévision extérieure 2 est comprise entre 450 MHz et 960 MHz en réception pour recevoir les signaux de télévision S82.

L'antenne de télévision extérieure 2 peut être constituée d'une ou plusieurs antennes adaptées à recevoir des canaux de télévision dans le domaine des fréquences dites UHF. Par exemple, l'antenne de télévision extérieure 2 peut être une unique antenne de télévision à large bande passante ou un ensemble d'antennes groupées. Un tel ensemble ou groupement d'antennes présente généralement des performances significativement meilleures (*e.g*. gains et directivité plus élevés) dans leur domaine de fréquence plus restreint.

Selon le principe de l'invention, l'antenne de télévision extérieure 2 (*i.e.* au moins une antenne simple ou un ensemble d'antennes groupées) est avantageusement utilisée pour recevoir des signaux radio-mobiles en provenance d'une et/ou des stations de base 1.1, notamment de type LTE et/ou 5G, par exemple, dans une bande de fréquences comprises entre 450 MHz et 960 MHz. Ainsi, la bande de réception des signaux radio-mobiles est incluse dans la bande passante de l'antenne de télévision extérieure 2.

Le domaine de fréquences utilisées en réception dépend essentiellement du modèle de l'antenne concerné. Par exemple, en France, les fréquences utilisées par des antennes de réception TV à large bande passante (i.e. *wideband* en anglais) conventionnelles situées en toiture conçues avant la mise en place de transmission de la télévision par voie numérique sont généralement comprises entre 450 MHz et 960 MHz, et plus particulièrement entre 470 MHz et 865 MHz. En Italie, ces fréquences sont généralement comprises entre 470 MHz et 960 MHz pour permettre l'allocation de 70 à 81 chaînes de télévision. Dans ce cas, des antennes de télévision à large bande passante sont utilisées.

En pratique, des marges opérationnelles sont généralement appliquées lors de la conception des antennes de télévision de sorte que leur bande passante de réception soit généralement comprise entre 450 MHz et 960 MHz quel que soit le pays considéré, de manière à couvrir l'intégralité des canaux de télévision au niveau international ainsi que l'ensemble des fréquences utilisées selon le standard LTE.

De préférence, l'antenne de télévision extérieure 2 est de type *Yagi* ou *Log périodique.* Ces antennes ont l'avantage de présenter un gain et une directivité élevés. Ainsi, ces antennes permettent avantageusement d'obtenir un gain élevé pour le signal radio-mobile, dans la direction selon laquelle l'antenne est orientée.

Typiquement, les antennes de télévision de type *Yagi* actuellement en place sur les toits des logements en France présentent des gains de l'ordre de 11 dB à 15 dB dans leur bande de fréquences, avec une ouverture de 30° à 3dB.

Ainsi, selon le principe de l'invention, l'antenne de télévision extérieure 2 est avantageusement utilisée pour capter les signaux radio-mobiles, par exemple LTE et/ou 5G, émis par la station de base 1.1 la plus proche du terminal 4, dans la direction selon laquelle pointe ladite antenne 2.

Le gain fourni par l'antenne de télévision extérieure 2 constitue un premier facteur d'amélioration pour augmenter la qualité du signal radio-mobile reçu à l'intérieur du bâtiment. Par conséquent, le gain de l'antenne de télévision extérieure 2 a pour effet d'améliorer la connectivité radio-mobile et de maximiser les débits de transmission radio-mobile à l'intérieur des bâtiments, c'est-à-dire là où une couverture de type 4G et/ou 5G serait insuffisante en utilisant les techniques de l'art antérieur.

Bien que l'antenne de télévision extérieure 2 ait été initialement conçue pour la réception de canaux de télévision à des fréquences UHF, typiquement comprises entre 450 MHz et 960 MHz, celle-ci peut être avantageusement utilisée en particulier pour la réception de signaux LTE et/ou 5G, selon le principe de l'invention.

En effet, en France, les opérateurs de téléphonie mobile opèrent dans les bandes de fréquences LTE/5G comprises entre 703 MHz et 862 MHz.

Par exemple, en France, sur la bande LTE/5G n°20, un spectre de 20 MHz est alloué dans la bande de fréquences comprises entre 708 MHz et 718 MHz sur le lien montant et dans la bande de fréquences comprises entre 763 MHz et 773 MHz sur le lien descendant. Sur la bande LTE/5G n°28, un spectre additionnel de 20 MHz est alloué dans la bande de fréquences comprises entre 811 MHz et 821 MHz sur le lien descendant et dans la bande de fréquences comprises entre 852 MHz et 862 MHz sur le lien montant.

Ainsi, en France, les bandes de fréquences UHF utilisées sur le lien descendant pour les communications LTE/5G sont intégralement comprises dans la bande passante de l'antenne de télévision extérieure 2 en réception.

De manière générale, on désigne par *bande de fréquences LTE* toute bande de fréquences opérationnelles E-UTRA selon les spécifications 3GPP. Tout ou partie des bandes de fréquences utilisées selon le standard LTE peuvent également être utilisées pour le standard 5G.

A un niveau régional, les déploiements utilisent un sous-ensemble de ces bandes de fréquences opérationnelles pour lesquelles sont attribuées des licences d'exploitation. Dans le cadre de la présente invention, une bande de fréquences LTE/5G désigne toute bande de fréquences appartenant à un réseau LTE/5G commercial dans un pays donné. Dès lors que des transpositions ou conversions de fréquences sont considérées dans le cadre de la présente invention, on considère qu'elle sont effectuées vers d'autres bandes de fréquences LTE/5G détenues par le même opérateur radio-mobile ou vers une bande de fréquence libre (*i.e.* non soumise à l'attribution d'une licence), telle qu'une bande de fréquences Wi-Fi à 2,4 GHz ou à 5 GHz.

Par la suite, le *lien descendant* désignera le lien de communication entre la station de base 1.1 et le terminal 4, c'est-à-dire lorsque le signal est émis par la station de base et reçu par le terminal (*i.e.* le signal descend de la station de base vers le terminal).

A l'inverse, le *lien montant* désignera le lien de communication du terminal 4 vers la station de base 1.2. En fonction du mode de réalisation considéré, le lien montant pourra donc désigner d'une part le lien de communication depuis le terminal 4 de l'utilisateur final directement vers la station de base 1.2, ou d'autre part le lien depuis le terminal vers le module de traitement et le lien depuis le module de traitement vers la station de base 1.2. (*i.e.* dans tous les cas, le lien montant désigne que le signal "monte" du terminal vers la station de base).

Par la suite, on désignera par signal *radio-mobile* (ou signal mobile), tout signal radiofréquence émis selon un standard de téléphonie mobile, tel que GSM (*Global System for Mobile Communication*), UMTS (*Universal Mobile Telecommunications System*), LTE (*Long Term Evolution*) ou 5G (5^{ème} Génération).

Par la suite, on désignera par *signal radiofréquence* tout signal radio quels que soient la fréquence porteuse et le format du signal considéré. En ce sens, un signal radio-mobile est un signal radiofréquence particulier. Dans la présente description, nous considérons le cas particulier où le signal radio-mobile est un signal conforme au standard LTE et/ou 5G.

Le système 100 selon l'invention comprend en outre un lien de communication filaire 5 reliant l'antenne de télévision extérieure 2 à un module de traitement de signaux radiofréquences 6 installé à l'intérieur de la maison ou du bâtiment 3. Ce lien est adapté à transmettre des signaux de télévision et des signaux radio-mobiles dans la bande de réception de l'antenne de télévision extérieure 2.

Dans le présent mode de réalisation, ce lien de communication filaire 5 est un câble coaxial, par exemple un câble référencé RG-6, communément utilisé pour relier les antennes de télévision à des récepteurs de télévision.

Dans d'autres variantes de réalisation, le lien de communication filaire 5 pourra être constitué par un tunnel optique, *i.e.* un lien en fibre optique comprenant à chacune de ses extrémités des convertisseurs optoélectroniques adaptés à convertir un signal radio en un signal optique ou inversement.

La fibre optique est particulièrement bien adaptée pour limiter les pertes de transmission, notamment dans le cas où la distance entre l'antenne TV extérieure 2 et le module de traitement 6 est élevée.

La fibre optique est également avantageuse dans le cas où le nombre de modules de traitement reliés à l'antenne TV extérieure 2 est élevé, par exemple dans le cas d'un immeuble comprenant une pluralité d'appartements, à l'intérieur desquels une connectivité radio-mobile doit être fournie selon le principe de l'invention.

La fibre optique fournit également une immunité vis-à-vis des interférences radiofréquences permettant d'atteindre une qualité de signal plus élevée en comparaison avec l'utilisation d'un câble coaxial.

Quelle que soit la nature du lien de communication filaire 5 utilisé, celui-ci fournit un canal de transmission amélioré par rapport au canal radio classiquement utilisé pour transmettre le signal LTE ou 5G à l'intérieur du bâtiment 3. En particulier, le lien de communication filaire 5 permet d'atteindre des niveaux de pertes et de bruit réduits par rapport à un canal de transmission LTE ou 5G classique.

Ainsi, le lien de communication filaire 5 constitue un deuxième facteur d'amélioration pour optimiser la qualité du signal LTE et/ou 5G à diffuser à l'intérieur du bâtiment, ce qui a pour effet de maximiser les débits de transmission pour le terminal 4 se trouvant à l'intérieur du bâtiment 3.

L'utilisation d'une antenne de télévision extérieure 2 de type *Yagi* ou Log-périodique en association avec un lien de communication filaire 5, par exemple à base de câble coaxial comme décrit ci-dessus, permet avantageusement d'augmenter d'environ de 30 dB, le bilan de liaison entre la station de base la plus proche 1.1 et le terminal 4, par rapport au cas classique de réception d'un signal LTE ou 5G dans un environnement urbain conventionnel. Ce gain de 30 dB correspond à un facteur multiplicatif égal à 1000, permettant d'atteindre des augmentations substantielles de débits de transmission par rapport aux solutions de l'art antérieur.

A titre d'exemple illustratif, le module de traitement 6 est un récepteur de télévision (*set-top box* en anglais). De manière conventionnelle, ce récepteur de télévision dit récepteur TV est connecté à un téléviseur 7, de manière à fournir les données des signaux de télévision S82 reçus de la station TV émettrice 800, par exemple selon le standard DVB-T (*Digital Video Broadcasting* - *Terrestrial*) ou DVB-T2 (*Digital Video Broadcasting* - *Second Génération Terrestrial*)*.*

Selon une variante de réalisation, le module de traitement 6 est incorporé dans le téléviseur 7, de manière à rendre le système plus compact.

Le système 100 selon l'invention comprend en outre le terminal 4 situé à l'intérieur de la maison 3. Cet espace intérieur est considéré comme étant confiné, dans la mesure où les ondes radiofréquences, notamment les signaux LTE ou 5G, ont des difficultés à pénétrer à l'intérieur de la maison 3 directement depuis la station de base la proche via le canal de transmission radio conventionnel.

Sur le lien descendant, le terminal 4 est apte à recevoir au moins un signal radiofréquence S12 depuis le module de traitement 6. Sur le lien montant, le terminal 4 est apte à transmettre au moins un signal radiofréquence vers le module de traitement 6 (signal S41) ou vers la plus proche station de base 1.2 (signal S'41).

Par la suite, on désignera par *terminal de l'utilisateur final* ou plus simplement par *terminal,* tout équipement portable comprenant une interface radio pour communiquer sans fil au moins directement avec le module de traitement 6. Dans le présent mode de réalisation, le terminal est un téléphone portable équipé d'une interface Wi-Fi et d'une interface UMTS et LTE et/ou 5G.

Selon une particularité de l'invention, le module de traitement 6 comporte un moyen d'extraction 6.1 adapté pour extraire au moins un signal radio-mobile S12 (*e.g.* signal LTE ou SG) parmi les signaux radiofréquences S12, S82 reçus par l'antenne de télévision extérieure 2.

Dans le présent mode de réalisation, ce moyen d'extraction 6.1 est un diplexeur capable d'extraire le signal LTE et/ou 5G parmi l'ensemble des signaux reçus de l'antenne de télévision extérieure 2 via le lien de communication filaire 5.

Comme illustré sur la **figure 2****,** le moyen d'extraction 6.1 est un diplexeur selon une première variante de réalisation.

Le diplexeur présente un port d'entrée 600 configuré pour recevoir conjointement le signal LTE et/ou 5G (S12) et le signal TV (S82) captés par l'antenne de télévision extérieure 2. Le diplexeur 6.1 comprend un premier port 610 de sortie configuré pour fournir uniquement le signal LTE ou 5G (S12) et comprend un deuxième port de sortie 620 configuré pour fournir uniquement le signal TV (S82). Le port d'entrée 600 est relié à une extrémité du lien filaire 5. Le deuxième port 620 est relié au téléviseur 7. Le premier port de sortie 610 est relié à une antenne 6.10 adaptée pour émettre un signal radio-mobile de type LTE ou 5G.

Par exemple, le diplexeur 6.1 comprend un coupleur radiofréquence permettant de distribuer le signal incident sur deux voies de transmission distinctes à l'intérieur du diplexeur. Le diplexeur comprend en outre sur chaque voie de transmission des filtres fréquentiels adaptés à la nature du signal à extraire sur chacune des voies. A titre d'exemple illustratif, une des voies comprend un premier filtre passe-bande dont la bande passante correspond à la bande de fréquences du signal radio-mobile et un deuxième filtre passe-bande dont la bande passante correspond à la bande de fréquences du signal TV. Ainsi, le diplexeur permet de séparer les signaux reçus sur son port d'entrée 600 en deux signaux dans des bandes de fréquences distinctes, de manière à extraire sur un des deux ports les signaux radio-mobiles destinés à être diffusés à l'intérieur du bâtiment.

Selon d'autres variantes de réalisation, le diplexeur pourra être remplacé par un démultiplexeur connecté à un ou plusieurs multiplexeurs, ce qui est particulièrement utile dans le cas où l'opérateur radio-mobile dispose de plusieurs bandes spectrales non continues pour la transmission des signaux radio-mobiles (*e.g*. LTE et/ou 5G) sur le lien descendant.

En particulier, dans le cas où l'opérateur radio-mobile émet par l'intermédiaire des stations de base des signaux radio-mobiles sur plusieurs bandes de fréquences, il peut être prévu pour le module de traitement de retransmettre l'intégralité de ces signaux au terminal 4 à l'intérieur du bâtiment.

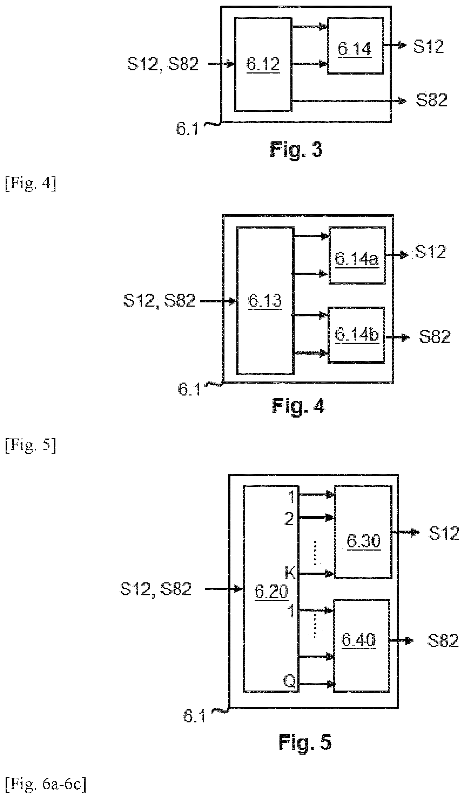

Selon une deuxième variante de réalisation telle qu'illustrée à la **figure 3****,** les moyens d'extraction 6.1 comprennent un triplexeur (c'est-à-dire, un démultiplexeur 1:3) 6.12 associé à un diplexeur 6.14.

Le triplexeur 6.12 comprend un port d'entrée adapté à recevoir conjointement un signal de télévision S82, un signal radio-mobile S12, par exemple de type 4G comprenant une première bande de fréquences comprises entre 763 MHz et 773 MHz et une deuxième bande de fréquences comprises entre 811 MHz et 821 MHz.

Le triplexeur 6.12 comprend en outre trois ports de sortie. Le triplexeur est configuré de sorte que les première et deuxième bandes du signal radio-mobile S12 sont fournies sur des premier et deuxième ports de sortie du triplexeur respectivement, tandis que le signal de télévision S82 est fourni sur un troisième port de sortie du triplexeur destiné au téléviseur 7.

Selon cette deuxième variante de réalisation, il est prévu de relier au triplexeur un diplexeur 6.14 tel que celui décrit en référence à la figure 2 mais à la différence qu'il est monté en « sens inverse », c'est-à-dire qu'il est relié aux premier et deuxième ports de sortie du triplexeur 6.12, de manière à fournir sur un même port en sortie les première et deuxième bandes de fréquences 763-773 MHz et 811-821 MHz.

De manière plus générale, les moyens d'extraction 6.1 sont configurés pour recevoir sur un port d'entrée une pluralité de signaux TV appartenant à des bandes de fréquences TV distinctes et une pluralité de signaux 4G et/ou 5G appartenant à des bandes de fréquences radio-mobiles distinctes. Les moyens d'extraction sont également configurés pour fournir sur un premier port de sortie tout ou partie de la pluralité de signaux 4G et/ou 5G et sur un deuxième port de sortie tout ou partie de la pluralité de signaux TV.

La **figure 4** illustre une troisième variante de réalisation des moyens d'extraction comprenant un quadriplexeur 6.13 et deux diplexeurs 6.14a, 6.14b. Le quadriplexeur comprend un port d'entrée destiné à recevoir les signaux radio-mobiles et les signaux de télévision. Le quadriplexeur comprend également quatre ports de sortie, deux de ces ports étant adaptés à extraire les signaux radio-mobiles tandis que les deux autres ports étant adaptés à extraire les signaux de télévision. Les deux diplexeurs 6.14a, 6.14b sont du même type que celui 6.14 décrit en référence à la figure 3.

La **figure 5** illustre une généralisation de la troisième variante de réalisation précédemment décrite en référence à la figure 4.

Selon cette variante généralisée, les moyens d'extraction 6.1 comprennent: - un étage de séparation 6.20 comprenant un démultiplexeur 1 :(K+Q) disposant d'un port d'entrée et de K+Q ports de sortie, *e.g.* un quadriplexeur (K+Q=4) ou un triplexeur (K+Q=3), l'étage de séparation permettant de répartir fréquentiellement les signaux reçus par l'antenne extérieure 2 sur les K+Q ports de sortie, et un étage de combinaison relié à l'étage de séparation. L'étage de combinaison incluant un premier multiplexeur 6.30 à K entrées et 1 sortie (K:1) destiné à fournir en sortie tout ou partie de la pluralité de signaux 4G et/ou 5G et un deuxième multiplexeur 6.40 à Q entrées et 1 sortie (Q :1) destiné à fournir en sortie tout ou partie de la pluralité de signaux TV.

Chaque port d'entrée de l'étage de combinaison 6.30, 6.40 est relié à un port de sortie distinct de l'étage de séparation 6.20, de manière à combiner fréquentiellement plusieurs signaux reçus de l'antenne extérieur sur un même port de sortie de l'étage de combinaison.

Dans le cas particulier où K=2 et Q=2, l'étage de séparation est constitué par un quadriplexeur (1:4) et l'étage de combinaison comprend deux diplexeurs (2:1) correspondant à la troisième variante de réalisation illustrée à la figure 4. Les deux diplexeurs sont montés en «sens inverse», c'est-à-dire comme décrit ci-dessus en référence à la figure 3.

Quel que soit le mode de réalisation considéré, les moyens d'extraction 6.1 sont configurés pour extraire d'une part les signaux radio-mobiles de type 4G et/ou 5G, par exemple sur une bande de fréquences comprises entre 790 MHz et 862 MHz, et d'autre part les signaux de télévision par exemple, sur une bande de fréquences comprises entre 450 MHz et 790 MHz. Cette extraction s'effectue au moyen de filtres passe-bande adaptés aux bandes de fréquences concernées.

Les bandes de fréquences des signaux radio-mobiles sont distinctes des bandes de fréquences des signaux de télévision et ces bandes ne se chevauchent pas, bien que celles-ci puissent être discontinues.

Les variantes de réalisation décrites en référence aux figures 2, 3, 4 et 5 sont données à titre d'exemples illustratifs. Bien évidemment, toute autre variante de réalisation pourra être envisagée dans le cadre de la présente invention pour s'adapter aux futurs plans d'allocation de canaux de télévision et/ou de canaux de communication 4G et/ou 5G, notamment dans le cas où les canaux de télévision et/ou de communication sont distribués dans des sous-bandes de fréquences discontinues.

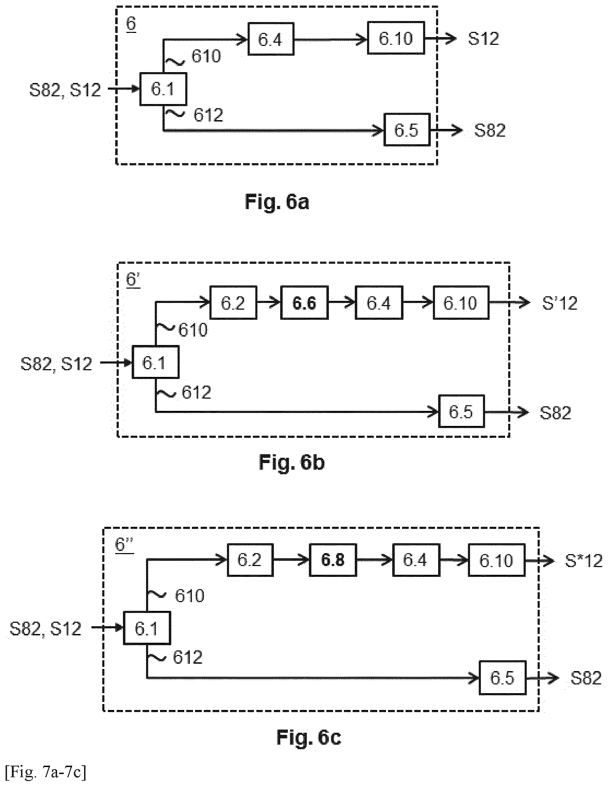

La **figure 6a** représente de manière schématique, l'architecture du module de traitement conformément à un premier mode de réalisation, selon lequel le module de traitement 6 joue le rôle d'un répéteur radio, destiné à retransmettre le signal 4G et/ou 5G (S12) reçu de la station de base 1.1 à destination du terminal 4.

Selon une particularité de l'invention, le module de traitement 6 comprend un diplexeur 6.1 tel que décrit en référence à la figure 2 et une antenne 6.10 adaptée à émettre le signal LTE et/ou 5G (S12) fourni sur le premier port de sortie 610 du diplexeur 6.1.

Par exemple, le diplexeur 6.1 est configuré pour orienter des signaux dans une bande de fréquences comprise entre 763 MHz et 773 MHz ou entre 811 MHz et 821 MHz sur son premier port de sortie 610.

Le signal de télévision reçu sur le deuxième port de sortie 612 du diplexeur 6.1 est destiné au téléviseur 7. Ce signal peut être traité (*e.g*. amplifié) par un sous-module de traitement 6.5.

De manière optionnelle, le module de traitement 6 comprend en outre un premier étage d'amplification 6.4 incluant au moins un amplificateur de puissance (*power amplifier* en anglais). Par exemple, l'étage d'amplification 6.4 est connecté au premier port de sortie 610 du diplexeur 6.1 et au port d'entrée de l'antenne 6.10.

De manière avantageuse, l'amplificateur de puissance est configuré pour augmenter la puissance du signal LTE et/ou 5G destiné à être émis par l'antenne 6.10 à l'intérieur de l'espace confiné, de manière à améliorer la couverture 4G et/ou 5G et ainsi contribuer à augmenter le débit de transmission. Le module de traitement 6 est configuré de telle sorte que la valeur de la puissance rayonnée en sortie de l'antenne 6.10 du module de traitement 6, notamment la valeur maximale, est conforme au standard LTE et 5G en vigueur, en tenant compte du gain de l'antenne 6.10. De manière générale, plusieurs étages d'amplification, réalisés notamment à base d'amplificateurs à faible bruit ou amplificateurs conventionnels, pourront être prévus à différents niveaux au sein du module de traitement, en fonction de la conception souhaitée, de la réponse fréquentielle des composants utilisés et de la bande de fréquences considérée.

Selon ce premier mode de réalisation, le module de traitement 6 est adapté pour "répéter" le signal LTE et/ou 5G reçu de l'antenne de télévision extérieure 2. Dans ce cas, le module de traitement 6 joue le rôle d'un répéteur actif (désigné *signal booster* en anglais). En l'absence d'amplification (*e.g*. gain nul ou absence de l'étage d'amplification 6.4), le module de traitement 6 joue le rôle d'un répéteur passif.

La **figure 6b** représente de manière schématique, l'architecture du module de traitement conformément à un deuxième mode de réalisation, selon lequel le module de traitement 6' est configuré pour fournir au moins un signal transposé en fréquence, éventuellement amplifié.

Dans ce cas, le module de traitement 6' comprend des moyens de transposition de fréquence ou sous-module de conversion de fréquence 6.6. Par exemple, ce sous-module de conversion de fréquence 6.6 comprend un mélangeur radiofréquence, un oscillateur local et optionnellement un filtre adapté à supprimer les composantes fréquentielles non désirées générées en sortie du mélangeur.

De manière avantageuse, le module de transposition de fréquence 6.6 permet de transposer le signal LTE ou 5G (S12) reçu de l'antenne de télévision extérieure 2 (*i.e.* sur le premier port 610 de sortie du diplexeur 6.1) dans une bande de fréquences différente de celle du signal LTE ou 5G reçu.

Par exemple, le module de transposition 6.6 est configuré pour transposer le signal LTE reçu dans la bande LTE n°20 (*i.e.* entre 708 MHz et 718 MHz) vers la bande LTE n°7 dans un canal de 10 MHz (*i.e.* entre 2620 MHz et 2690 MHz). La transposition du signal LTE reçu vers une bande de fréquences plus élevée est particulièrement avantageuse étant donné que les fréquences hautes (*e.g*. 2,620-2,690 GHz) sont susceptibles de générer moins d'interférences que les fréquences basses (*e.g*. 708-718 MHz).

On désignera par S'12 le signal LTE transposé en fréquence.

De manière optionnelle, le module de traitement 6' comprend en outre un étage de pré-amplification 6.2 incluant au moins un amplificateur à faible bruit (*i.e. low noise amplifier* en anglais). L'étage de pré-amplification 6.2 est connecté au premier port 610 du diplexeur 6.1 et à l'entrée du module de transposition de fréquence 6.6.

De manière générale, plusieurs étages d'amplification, réalisés notamment à base d'amplificateurs à faible bruit et/ou d'amplificateurs conventionnels, pourront être prévus à différents niveaux au sein du module de traitement, en fonction de la conception souhaitée, de la réponse fréquentielle des composants utilisés et de la bande de fréquences considérée.

La pré-amplification est avantageusement appliquée avant de procéder à la transposition de fréquence. Ainsi, l'amplificateur à faible bruit est configuré pour minimiser le rapport signal sur bruit du signal LTE et/ou 5G transposé S'12 destiné à être émis par l'antenne 6.10 à l'intérieur de l'espace confiné, en tenant compte des performances du mélangeur pour la conversion de fréquences.

Ainsi, le module de traitement 6' peut avantageusement diffuser le signal LTE ou 5G (S'12) sur une bande de fréquence plus adaptée à une transmission en intérieur, de manière à maximiser le débit de transmission et réduire les interférences radiofréquences.

Le choix de la fréquence à laquelle le signal LTE ou 5G (S'12) est retransmis à l'intérieur de la maison peut tenir compte de la comptabilité de réception des terminaux mobiles. Par exemple, la fréquence sur laquelle est transposée dite fréquence de transposition est prédéterminée en tenant compte des conditions de propagation du canal radio dans l'espace confiné.

De manière optionnelle, le sous-module de transposition de fréquence 6.6 pourra être configuré pour déterminer la fréquence de transposition de manière dynamique, notamment en fonction des conditions du canal de transmission radio mesurées en temps réel. Le canal de transmission pourra être caractérisé en temps réel selon des techniques de mesures conventionnellement utilisées dans les systèmes de communication radiofréquences.

La **figure 6c** représente de manière schématique, l'architecture du module de traitement conformément à un troisième mode de réalisation, selon lequel le module de traitement 6" est configuré pour convertir le format du signal radio-mobile reçu S12 de l'antenne de télévision extérieure 2, selon un autre standard (*i.e.* différent de celui du signal reçu S12).

Par exemple, le module est adapté à convertir un signal LTE en un signal Wi-Fi. La conversion de format peut également inclure une transposition de fréquence dans une autre bande de fréquence 5G, par exemple dans une bande de fréquences millimétriques (*e.g*. incluses dans le domaine 30-70 GHz).

On désignera le signal ainsi converti par S*12.

Dans ce cas, le module de traitement 6" correspond à celui décrit selon le deuxième mode de réalisation en référence à la figure 6b ci-avant mais comprend en outre un sous-module de conversion 6.8 configuré pour convertir le format du signal LTE et/ou 5G reçu, par exemple en un signal converti selon le standard Wi-Fi. Dans ce cas, le sous-module de conversion 6.8 met en oeuvre le sous-module de transposition de fréquence 6.6, tel que décrit en référence à la figure 6b.

De préférence, le sous-module de conversion 6.8 est mis en oeuvre, au moins partiellement, par un module radio-logicielle *software radio* ou *software-defined radio.* En particulier, le module de traitement est un équipement du réseau radio-mobile LTE/5G (*i.e. LTE*/*5G User Equipment*) tel qu'un modem LTE/5G.

Selon une variante de réalisation, l'antenne intérieure 6.10 peut être intégrée au module radio-logicielle pour une meilleure compacité. Le module radio-logicielle peut également être adapté à mettre en oeuvre toutes ou partie des opérations sur le signal LTE et/ou 5G reçu, telles que l'amplification, la conversion analogique-numérique et numérique-analogique, ke traitement numérique du signal tel que par exemple modulation/démodulation, la transformée de Fourier rapide ou son inverse (I)FFT ((*Inverse*) *Fast Fourier Transform* en anglais), l'insertion et/ou l'élimination des préfixes cycliques, la correction d'erreurs, le cryptage/décryptage, le routage réseau incluant la transposition de fréquences.

Le module radio-logicielle peut être aisément configuré pour convertir le signal radio-mobile LTE et/ou 5G (S12) reçu de l'antenne de télévision extérieure 2 en un signal de type Wi-Fi (S*12) à une fréquence plus élevée (*e.g.* 2,4 GHz ou 60 GHz, cette dernière étant une fréquence millimétrique où le Wi-Fi est connu comme WiGig) que celle du signal LTE et/ou 5G reçu (S12). Le signal converti est particulièrement bien adapté pour une transmission sans fil en intérieur avec des terminaux mobiles, tels que des téléphones portables, tablettes et objets connectés. Dans le cas du Wi-Fi, le module radio-logicielle comprend, par exemple, un jeu de puces électroniques configurées pour opérer selon un ou plusieurs standards Wi-Fi.

Ainsi, le module de traitement 6" joue le rôle d'un point d'accès Wi-Fi capable de fournir une couverture Wi-Fi à l'intérieur du bâtiment à partir de signaux 4G et/ou 5G reçus de l'antenne télévision extérieure 2.

Les modes de réalisation selon les figures 6a, 6b, 6c ont été décrits ci-dessus dans le cas où les moyens d'extraction 6.1 des signaux radio-mobiles sont constitués par un diplexeur selon la première variante de réalisation et restent valables pour toute autre variante de réalisation des moyens d'extraction, en particulier celles décrites en référence aux figures 3, 4 et 5.

Selon une autre particularité de l'invention, le module de traitement est configuré pour communiquer selon des technologies de transmission de type MIMO (*Multiple Input Multiple Output* en anglais), SIMO (*Single Input Multiple Output* en anglais) ou MISO (*Multiple Input Single Output* en anglais).

Par exemple, le module de traitement 6', 6" est mis en oeuvre selon la technologie SDR, de telle sorte que toutes les modifications requises pour s'adapter à la technologie de transmission concernée (MIMO, SIMO, MISO) peuvent être réalisées sous forme logicielle, sans nécessiter d'adapter le module de traitement sur le plan matériel.

Selon une première configuration dite SIMO, l'antenne de télévision extérieure 2 reçoit des mêmes données émises, de manière redondante, par une pluralité d'antennes pouvant être localisées sur différentes stations de base. Cette première configuration dite SIMO présente au moins les avantages suivants.

Premièrement, la redondance au niveau du codage et du traitement est mise en oeuvre par l'émetteur plutôt que par le récepteur. Ainsi, lorsque le module de traitement 6 joue le rôle de répéteur avec ou sans transposition de fréquences, la sollicitation de la batterie du terminal est réduite en raison d'un niveau de traitement plus faible permettant d'optimiser la durée de vie de la batterie. La réalisation d'un traitement par le module de traitement au niveau logiciel selon la technologie SDR permet également d'optimiser la consommation énergétique du module de traitement, sans appliquer de modification sur le plan matériel.

Deuxièmement, étant donné que les conditions de propagation sont différentes de celles des configurations classiques LTE, il est possible de réduire drastiquement les interférences issues de stations de base voisines.

On notera que, dans le cas où les antennes d'émissions sont localisées sur différentes stations de base, une unité de contrôle centralisé est requise pour coordonner ou programmer les émissions. Un tel contrôle centralisé est possible, par exemple avec une architecture de réseau de type C-RAN (Cloud-RAN *en anglais*). Dans ce cas, les stations de bases peuvent être de type LTE (4G), NR (SG) ou une combinaison des deux.

Selon une deuxième configuration dite SIMO (ou diversité de réception), plusieurs antennes de télévision extérieures reçoivent plusieurs versions d'un même signal émis par une unique antenne d'émission d'une station de base. Cette configuration permet avantageusement aux récepteurs de recevoir des signaux d'une pluralité de sources indépendantes pour combattre les effets d'évanouissement (*fading* en anglais), qui sont plus prononcés lorsque le chemin n'est pas direct pour les signaux émis sur le lien descendant. Dans ces conditions dites *Non Line of Sight* en anglais, les signaux subissent des atténuations en raison de multi-trajets dus notamment à des réflexions multiples.

La configuration SIMO présente l'avantage d'être facile à mettre en oeuvre mais avec l'inconvénient de nécessiter de réaliser un traitement au niveau du récepteur. Malgré cet inconvénient, cette configuration reste satisfaisante pour de nombreuses applications. Lorsque le récepteur est localisé dans un terminal tel qu'un téléphone portable, le niveau de traitement peut être limité par la taille, le coût et la capacité de la batterie. Par conséquent, dans certains modes de réalisation, il est avantageux de réaliser ce traitement au niveau logiciel grâce à la technologie SDR.

Selon une troisième configuration dite MEMO, plusieurs antennes extérieures reçoivent des signaux émis par plusieurs antennes d'émission. Cette configuration est utilisée pour améliorer conjointement la robustesse du canal et son débit. Des améliorations significatives en termes de performances peuvent être apportées mais nécessiteront généralement un coût de traitement additionnel au niveau du module de traitement (SDR) ou au niveau du terminal.

De manière générale, comme décrit précédemment, dès lors que le module de traitement 6', 6" est mis en oeuvre sous forme logicielle, par exemple selon la technologie SDR, aucune modification n'est requise sur le plan matériel au sein du module de traitement.

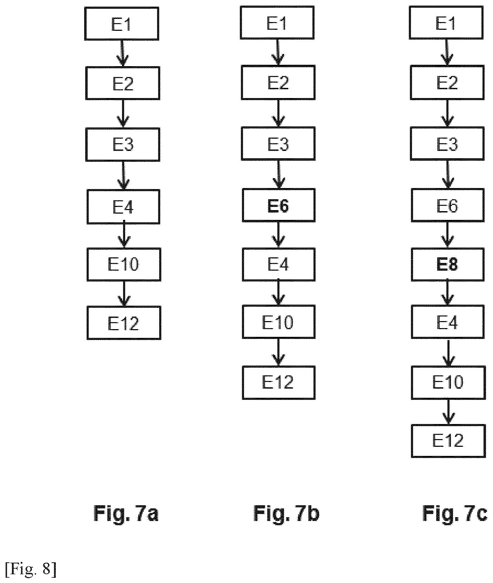

La **figure 7a** représente de manière schématique, le procédé de communication sur le lien descendant, selon le premier mode de réalisation de l'invention pour fournir une couverture 4G et/ou 5G à l'intérieur d'une maison (ou espace confiné) sans transposition de fréquence.

Lors d'une étape de réception E1, l'antenne de télévision extérieure 2 reçoit dans une bande de fréquences UHF, par exemple comprises entre 450 MHz et 960 MHz, une pluralité de signaux radiofréquences comprenant d'une part, au moins un signal radio-mobile S12 émis par une station de base 1.1 du réseau radio-mobile conformément au standard LTE ou 5G, et comprenant d'autre part un signal de télévision S82 émis par la station TV émettrice 800.

Lors d'une étape de transmission E2, la pluralité de signaux radiofréquences S82, S12 reçus par l'antenne de télévision extérieure 2 est transmise entre l'antenne de télévision extérieure 2 et le module de traitement desdits signaux radiofréquences situé à l'intérieur de l'espace confiné. Cette transmission s'effectue par le lien de communication filaire 5, par exemple un câble coaxial comme décrit précédemment en référence à la figure 1.

Lors d'une étape d'extraction E3, le module de traitement extrait le signal radio-mobile 4G et/ou 5G de ladite pluralité de signaux. Par exemple, cette extraction est réalisée un dispositif tel que décrit en référence à la figure 2, 3, 4 ou 5, ou par tout autre moyen d'extraction adapté à séparer les signaux radio-mobiles S12 des signaux de télévision S82.

Lors d'une étape d'amplification E4 optionnelle, le module de traitement 6amplifie le signal radio-mobile 4G et/ou 5G extrait lors de l'étape d'extraction E3. Par exemple, cette amplification est réalisée par l'étage d'amplification 6.4. D'autres étages d'amplification pourront être éventuellement prévus comme décrit ci-avant.

Lors d'une étape de diffusion E10, le module de traitement diffuse à l'intérieur de l'espace confiné le signal radio-mobile extrait lors de l'étape d'extraction. A cet effet, l'antenne 6.10 rayonne le signal radio-mobile extrait et éventuellement amplifié.

Lors d'une étape de réception E12, le signal diffusé par le module de traitement 6 lors de l'étape de diffusion E10 est reçu par le terminal 4. Ainsi, le signal LTE et/ou 5G émis par la station de base 1.1 est reçu à l'intérieur du bâtiment 3 dans de bonnes conditions (*e.g*. avec un rapport signal sur bruit élevé) par rapport au cas où le signal LTE et/ou 5G serait reçu via le canal radio conventionnel (*i.e.* directement par l'antenne du terminal sans l'intermédiaire de l'antenne de télévision extérieure 2).

Sur le lien descendant (*i.e.* de la station de base 1.1 vers le terminal 4), la diffusion par le module de traitement 6 du signal radio-mobile reçu de la station de base 1.1 par l'antenne de télévision extérieure 2 permet avantageusement d'améliorer la connectivité au réseau radio-mobile pour un terminal 4 situé à l'intérieur de l'espace confiné. Ainsi, une bonne connectivité radio-mobile 4G et/ou 5G peut être fournie à l'intérieur de l'espace confiné.

La **figure 7b** représente de manière schématique, le procédé de communication sur le lien descendant, selon le deuxième mode de réalisation de l'invention, pour fournir une couverture radio-mobile 4G et/ou 5G à l'intérieur de l'espace confiné en mettant en oeuvre une transposition de fréquence.

Selon ce deuxième mode de réalisation, le procédé comprend en outre, par rapport au premier mode de réalisation selon la figure 7a, entre l'étape d'extraction E3 et l'étape de diffusion E10, une étape de transposition de fréquence E6, selon laquelle le signal radio-mobile 4G et/ou 5G extrait est transposé sur une fréquence différente de celle à laquelle ledit signal radio-mobile a été reçu, de manière à fournir au moins un signal transposé en fréquence, ladite étape de transposition étant effectuée par ledit module de traitement 6' tel que décrit en référence à la figure 6b.

La transposition (ou conversion) de fréquence permet avantageusement de transposer le signal radio-mobile dans une autre bande de fréquences, par exemple parmi des bandes de fréquences allouées à la 4G. Les étapes E1, E2, E3, E10 et E12 correspondent déjà à celles déjà décrites en référence à la figure 7a.

La **figure 7c** représente de manière schématique, le procédé de communication sur le lien descendant, selon le troisième mode de réalisation de l'invention, pour fournir une couverture Wi-Fi à l'intérieur de l'espace confiné avec transposition de fréquence et conversion de format à partir du signal 4G ou 5G reçu.

Selon ce troisième mode de réalisation, le procédé comprend en outre, par rapport au deuxième mode de réalisation décrit en référence à la figure 7b, entre l'étape d'extraction E3 et l'étape de diffusion E10, une étape de conversion E8, lors de laquelle ledit au moins un signal radio-mobile 4G extrait est converti selon le standard Wi-Fi, de manière à fournir au moins un signal converti selon le standard Wi-Fi, ladite étape de conversion étant effectuée par ledit module de traitement 6" tel que décrit en référence à la figure 6c.

De cette manière, la couverture radio peut être adaptée selon les préférences ou les capacités de communication du terminal 4 situé dans l'espace confiné. En particulier, une couverture sans fil de type Wi-Fi, qui est généralement plus adaptée aux communications en intérieur, peut être avantageusement fournie aux terminaux à partir des signaux radio-mobiles reçus selon le standard LTE et/ou 5G via l'antenne de télévision extérieure 2.

De manière optionnelle, le procédé comprend en outre, entre l'étape d'extraction E3 et l'étape de diffusion E10, l'étape d'amplification E4, lors de laquelle signal converti est amplifié par ledit module de traitement 6" et en particulier par l'étage d'amplification 6.4.

L'étape d'amplification locale du signal radio-mobile au sein de l'espace confiné avant sa diffusion permet avantageusement d'améliorer la qualité de la transmission (*e.g.* signal rapport sur bruit accru) pour atteindre des débits de transmissions plus élevés.

Une étape de pré-amplification optionnelle peut être réalisée avant l'étape de transposition de fréquence E6 et/ou l'étape de conversion E8 selon les procédés décrits en référence aux figure 7b et 7c. De manière avantageuse, un amplificateur à faible bruit peut être utilisé pour optimiser le rapport signal sur bruit du signal transposé S'12 ou converti S*12.

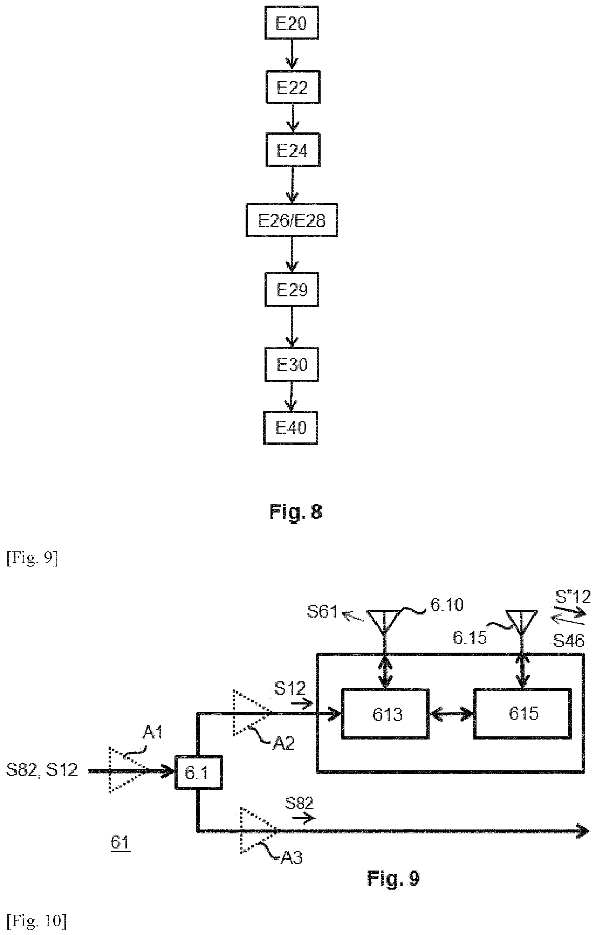

Le procédé de communication selon l'invention va maintenant être décrit en référence à la **figure 8****,** dans le cadre d'une communication sur le lien montant selon un mode de réalisation particulier, pour permettre à un signal émis par le terminal 4 à l'intérieur du bâtiment 3 d'être reçu par une station de base 1.2 dans de bonnes conditions de transmission de manière à améliorer le débit de transmission.

Le procédé de communication comprend une étape d'émission E20 d'un signal radiofréquence S'41 par le terminal 4 à destination de la station de base 1.2.

Dans le présent exemple, on considère un schéma de communication selon lequel la station de base 1.2 utilisée sur le lien montant est différente de la station de base 1.1 utilisée sur le lien descendant. Ce schéma de communication peut être géré par le mode dual dit "*dual connectivity*" tel que défini dans la norme *3GPP TS 36.300 version 13.2.0 Release 13* pour le LTE (4G) ou *3GPP TS 37.340 for NR* (5G) incluant l'interopérabilité avec le LTE, et/ou en mettant en oeuvre une architecture de réseau centralisée de type C-RAN (*CloudRadio Access Network* en anglais).

Le mode "*dual connectivity*" pourra également être utilisé pour permettre au terminal 4 de se connecter simultanément aux deux stations de base 1.1 et 1.2, moyennant la mise en oeuvre d'une fonction d'agrégation de canaux par le terminal 4. Ainsi, le terminal 4 pourra recevoir en outre un deuxième signal sur le lien descendant, ce deuxième signal étant issu de la deuxième station de base 1.2 utilisée sur le lien montant.

Dans le cas où le signal radiofréquence est un signal radio-mobile S'41 émis conformément au standard LTE ou 5G, dans une bande de fréquences compatibles avec le fonctionnement de la station de base 1.2, aucune conversion de format ni transposition de fréquence n'est requise.

Dans ce cas, le signal radio-mobile S'41 est transmis directement par le terminal 4 à la station de base 1.2 via le canal de transmission radio 4G/5G.

Le signal est reçu par la station de base 1.2 lors d'une étape de réception E40, de manière classique, c'est-à-dire sans faire intervenir le système selon l'invention.

De manière alternative, le signal radio-mobile (*e.g*. 4G/SG, WiGig, Wi-Fi) émis par le terminal 4 est intercepté par le module de traitement selon l'invention lors d'une étape d'interception E22. Le signal intercepté est envoyé par le module de traitement lors d'une étape d'envoi E30.

De manière optionnelle, le procédé comprend avant l'étape d'envoi E30, une étape de transposition de fréquence E26 pour transposer le signal intercepté à une fréquence différente de celle du signal intercepté et/ou une étape de conversion de format E28 pour convertir le format du signal intercepté de manière à fournir un signal conforme au standard 4G/5G.

De manière optionnelle, le signal intercepté et/ou le signal transposé en fréquence ou le signal converti est amplifié lors d'une ou plusieurs étapes d'amplification (étapes E24, E29).

Le signal ainsi traité est ensuite envoyé par le module de traitement à destination de la station de base par l'intermédiaire d'une antenne LTE/5G.

Trois exemples particuliers de réalisation du module de traitement selon l'invention vont maintenant être décrits en référence aux figures 9, 10 et 11.

La **figure 9** illustre un premier exemple particulier de réalisation du module de traitement selon l'invention, adapté à un usage domestique (*i.e.* destiné à être implanté dans des logements de particuliers).

Selon ce premier exemple, le module de traitement 61 comprend un modem radio-mobile 613 (*e.g.* LTE et/ou 5G), un routeur radio-fréquence (*e.g.* Wi-Fi) et au moins un point d'accès sans fil 615 (*e.g.* Wi-Fi). Le ou les points d'accès sans fil comprennent chacun au moins une antenne 6.15, par exemple de type Wi-Fi.

Le modem LTE/5G est adapté à communiquer avec le réseau radio-mobile. A cet effet, le modem LTE/5G comprend des emplacements pour recevoir une ou plusieurs cartes SIM (*Subscriber Indentity Module* en anglais) physiques ou virtuelles dites e-SIM (ou eUICC pour *embedded Universal Integrated Circuit Card* en anglais). De telles cartes peuvent être implantées directement au sein du module de traitement 61 et reprogrammées à distance de manière à gérer facilement des données d'identification relatives à un service auquel est abonné l'utilisateur. De manière avantageuse, la carte eSIM offre également la possibilité de partager des informations telles que le numéro de téléphone et l'identifiant du compte avec une autre carte SIM (*Subscriber Identity Module*).

Le modem LTE/5G est également adapté à communiquer avec le routeur et le(s) point(s) d'accès Wi-Fi. Le modem 613 est relié à au moins une antenne 6.10 adaptée à émettre des signaux LTE/5G. Le routeur Wi-Fi communique avec le ou les points d'accès Wi-Fi. Dans le cas où l'espace confiné à couvrir est étendu, plusieurs points d'accès Wi-Fi peuvent être reliés audit routeur.

Le routeur Wi-Fi peut être inclus dans un point d'accès Wi-Fi. De manière optionnelle, le routeur Wi-Fi et/ou le point d'accès Wi-Fi peut supporter le standard WiGig (IEEE 802.11ad) pour des connexions à très hauts débits avec le terminal 4.

Sur le lien descendant, sur réception d'un ensemble comprenant au moins un signal radio-mobile S12 et au moins un signal de télévision S82, les moyens d'extraction (*e.g.* un diplexeur ou un démultiplexeur 1:(M+N) relié à un premier multiplexeur (M:1) et à un deuxième multiplexeur (N:1) comme décrit précédemment) distribuent ledit au moins un signal radio-mobile S12 vers le modem LTE/5G. Ce signal S12 est ensuite converti en un signal S*21, par exemple Wi-Fi, à une fréquence comprise dans une bande de fréquences à 2,4 GHz ou à 5 GHz, par le point d'accès Wi-Fi avant d'être émis dans l'espace confiné à destination du terminal 4 de l'utilisateur.

De manière optionnelle, un ou plusieurs étages d'amplification peuvent être prévus sur le lien descendant à différents niveaux, *e.g*. en entrée des moyens d'extraction 6.1 (*i.e.* amplificateur A1), entre les moyens d'extraction 6.1 et le modem 613 (*i.e.* amplificateur A2) et/ou en sortie des moyens d'extraction 6.1 à destination du téléviseur (*i.e.* amplificateur A3). Sur la figure 9, les amplificateurs A1, A2, A3 sont représentés en pointillé pour indiquer leur caractère optionnel.

Sur le lien montant, le point d'accès Wi-Fi reçoit un signal radiofréquence S46, par exemple de type Wi-Fi selon le standard IEEE 802.11b émis par le terminal 4. Ce signal est converti par le point d'accès en un flux de données avant d'être transmis au modem 613 qui, à partir de ces données, crée un signal conforme au standard LTE/5G. Le signal LTE/5G ainsi obtenu (référencé S61) est ensuite émis via ladite au moins une antenne 6.10 LTE/5G à destination de la station de base 1.2. De manière optionnelle, un ou plusieurs étages d'amplification peuvent également être prévus sur le lien montant.

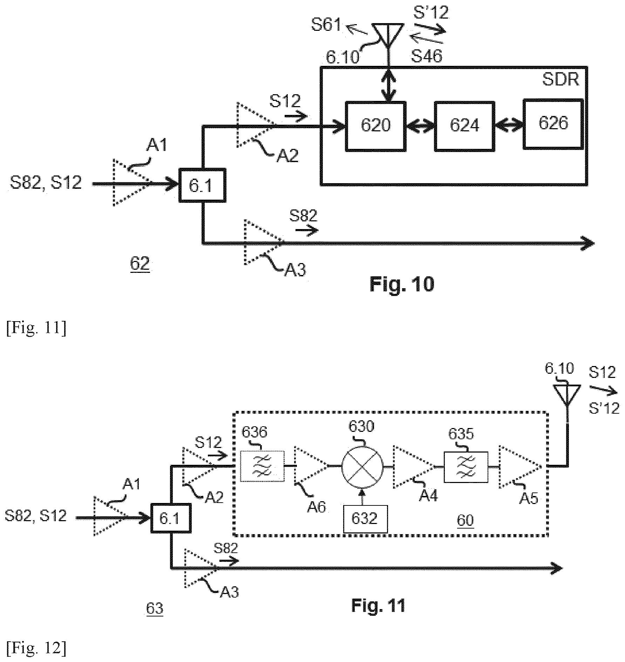

La **figure 10** illustre un deuxième exemple particulier de réalisation du module de traitement selon l'invention. Cet exemple est particulièrement bien adapté à des environnements ou des conditions d'usage particulièrement difficiles, *i.e.* présentant une charge de trafic élevée et/ou requérant une gestion des interférences.

Le module de traitement 62 selon ce deuxième exemple de réalisation diffère de celui du premier exemple de réalisation 61 précédemment décrit en référence à la figure 9, en ce que l'ensemble constitué par le modem LTE/SG, le routeur Wi-Fi et les points d'accès Wi-Fi sont remplacés un module radio-logicielle selon la technologie SDR (*software radio* ou *software-defined radio :* SDR, en anglais).

De manière avantageuse, la technologie SDR permet de mettre en oeuvre le module de traitement selon l'invention à faible coût, de manière flexible et conformément aux spécifications 3GPP, notamment dans le cas où le module de traitement met en oeuvre tout ou partie des fonctionnalités d'une station de base domestique (*e.g. 4G Home eNodeB* ou *5G Home gNodeB*) ou d'un relai LTE/5G (*e.g. LTE*/*5G relay* en anglais). Dans ce cas, il est nécessaire qu'il soit reconnu en tant que noeud officiel du réseau LTE/5G (*e.g. LTE-A*/*5G relay, Home eNb*/*gNb ou LTE*/*5G UE*)*.*

Dans le cas où le module de traitement joue le rôle d'une station de base domestique, tout ou partie des fonctions classiques destinées à être mises en oeuvre par une station de base domestique pourront être mises en oeuvre dans le module radio-logicielle.

Selon les particularités de la présente invention, le module radio-logicielle pourra être configuré pour traiter au moins un signal radio-mobile S12, par exemple de type LTE/5G, reçu sur le lien descendant et/ou traiter un signal radiofréquence S46, par exemple de type Wi-Fi ou WiGig reçu sur le lien montant.

Comme décrit ci-avant, ce traitement peut inclure des fonctions d'amplification, de transposition de fréquence, de conversion de format ou de standard. En particulier, le module radio-logicielle peut être configuré pour réaliser l'amplification à un niveau d'amplification déterminé dynamiquement et/ou la transposition de fréquence à une fréquence déterminée dynamiquement.

Comme illustré à la figure 10, le module radio-logicielle (SRD) comprend une unité frontale radio-fréquence 620 (*Radiofrequency front-end*)*,* une unité frontale numérique 624 (*digital front-end*) et une unité de traitement de signal 626 comprenant un processeur. L'unité frontale radiofréquence (RF) 620 est reliée à au moins une antenne 6.10.

Par exemple, l'unité frontale RF 620 peut comprendre un étage de conversion de fréquence, un amplificateur, un convertisseur numérique/analogique. Ce convertisseur est relié à l'unité frontale numérique qui elle-même est reliée à l'unité de traitement de signal. L'unité frontale numérique peut comprendre un mélangeur numérique, un oscillateur local numérique pour mettre en oeuvre la transposition de fréquence.

De manière avantageuse, ces unités sont mises en oeuvre tout ou partie sous forme logicielle selon la technologie SDR.

Sur le lien descendant, le signal radio-mobile S12, après avoir été éventuellement amplifié par l'amplificateur A2 situé en sortie des moyens d'extraction 6.1, est reçu par l'unité frontale radiofréquence 620 qui convertit le signal sous forme numérique avant de le transmettre à l'unité frontale numérique 624 qui peut faire appel au processeur de l'unité de traitement de signal 626.

Sur le lien montant, le signal radio-mobile S46 reçu du terminal 4 par l'antenne 6.10 est transmis après avoir été éventuellement traité par l'unité frontale numérique et éventuellement par l'unité de traitement de signal. Par exemple, dans le cas où le signal S46 reçu est un signal Wi-Fi, celui-ci est converti en un signal LTE/5G référencé S61 destiné à être reçu par la station de base 1.2.

L'architecture proposée selon ce deuxième exemple de réalisation est relativement coûteuse mais offre avantageusement une grande liberté de traitement des signaux reçus à la fois sur le lien montant et sur le lien descendant.

La **figure 11** illustre un troisième exemple particulier de réalisation du module de traitement selon l'invention. Ce troisième exemple est particulièrement bien adapté à un usage domestique notamment dans des maisons séparées.

Le module de traitement 63 selon cet exemple diffère de celui des premier 61 et deuxième 62 exemples de réalisation précédemment décrits en référence aux figures 9 et 10 respectivement, en ce qu'il est tout analogique et ne prévoit pas la mise en oeuvre du lien montant.

Au minimum, le module de traitement a pour rôle de retransmettre le signal radio-mobile S12 obtenu en sortie des moyens d'extraction 6.1. Dans ce cas, le module a pour fonction de relayer le signal radio-mobile S12 reçu par l'antenne de télévision extérieure 2.

De manière optionnelle, le module de traitement met en oeuvre une transposition de fréquence. A cet effet, il comprend un bloc analogique 60 de transposition de fréquence comprenant au moins un mélangeur 630, un oscillateur local 632, un filtre passe-bande 635. De manière connue, la fréquence du signal radio-mobile S12 est modifiée au moyen du mélangeur 630 alimenté par un signal d'oscillateur local. Le filtre 635 permet d'éliminer les composantes spectrales non souhaitées à l'issue du mélange du signal radio-mobile reçu S12 et du signal d'oscillateur local par le mélangeur 630.

De manière optionnelle, le module de traitement comprend en outre un filtre à rejet d'image (*image rejection filter* en anglais) 636 positionné entre l'amplificateur A2 en sortie des moyens d'extraction 6.1 et le mélangeur 630. Ce filtre à rejet d'image 636 est avantageusement utilisé pour supprimer des fréquences d'image interférentes qui seraient présentes en amont du mélangeur 630.

Un amplificateur A6 optionnel peut être fourni entre le filtre à rejet d'image 636 et le mélangeur 630. Les amplificateurs qui suivent un premier étage d'amplification peuvent être des amplificateurs conventionnels, *i.e.* pas nécessairement des amplificateurs à faible bruit (LNA), sans perte de performance. Par exemple, dans une chaîne d'amplificateurs, un amplificateur LNA est fourni en tête d'une chaîne d'amplification et suivi d'amplificateurs conventionnels.

L'architecture proposée selon ce troisième exemple de réalisation est particulièrement avantageuse dans la mesure où elle est simple et peu coûteuse à mettre en oeuvre.

Dans tous les exemples, modes et variantes de réalisation décrits ci-avant, une seule antenne de télévision extérieure 2 a été considérée. Toutefois, dans le cadre de la présente invention, on pourra également considérer le cas où les signaux radio-mobiles 4G/5G sont reçus par au moins une antenne extérieure supplémentaire 8 et dédiée à la réception de ces signaux.

De manière avantageuse, ladite au moins une antenne dédiée est orientée vers la station de base 4G/5G de manière à optimiser la réception des signaux 4G/5G pour contribuer à améliorer la qualité de la couverture 4G/5G à l'intérieur du bâtiment selon le principe de l'invention. Par exemple, ladite au moins une antenne est installée sur le toit de la maison en visibilité directe avec une ou plusieurs stations de base.

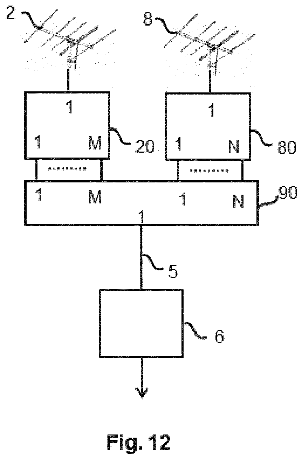

La **figure 12** illustre un exemple de réalisation particulier dans lequel le système selon l'invention comprend l'antenne de télévision extérieure 2 déjà décrite et une antenne extérieure 4G/5G dédiée 8 à la réception de signaux radio-mobiles, en particulier, destinée à recevoir des signaux radio-mobiles dans N bandes de fréquences, où N désigne un entier naturel non nul.

Cette antenne dédiée 8 est reliée à un premier démultiplexeur 1:N référencé 80, comprenant un port d'entrée et N ports de sortie, chaque port de sortie étant adapté à fournir un signal dans une bande de fréquences 4G/5G distincte. Ainsi, le premier démultiplexeur 80 sert à sélectionner parmi l'ensemble des signaux reçus par l'antenne dédiée 8 ceux reçus dans N bandes de fréquences 4G/SG, N désignant un entier naturel non nul.

De manière similaire, l'antenne de télévision extérieure 2 est reliée à un deuxième démultiplexeur 1:M référencé 20, comprenant un port d'entrée et M ports de sortie, chaque port de sortie étant adapté à fournir un signal dans une bande de télévision distincte. Ainsi, le deuxième démultiplexeur 20 sert à sélectionner parmi l'ensemble des signaux reçus par l'antenne de télévision extérieure 2 ceux reçus dans M bandes de fréquences de télévision, M désignant un entier naturel non nul.

L'ensemble de signaux de télévision et 4G/5G sélectionnés respectivement par les deuxième 20 (1:M) et premier 80 (1:N) démultiplexeurs sont ensuite transmis par le lien de communication filaire 5 (*e.g.* câble coaxial) tel que décrit précédemment. Pour cela, le système selon l'invention comprend un multiplexeur (M+N:1) référencé 90, comprenant M+N ports d'entrée et un port de sortie, les M et N ports d'entrée étant reliés respectivement aux M ports de sortie du deuxième démultiplexeur 20 (1:M) et aux N ports de sortie du premier démultiplexeur 80 (1:N) comme illustré sur la figure 12.

Dans le cas particulier où N=M=1, les deux démultiplexeurs 20, 80 et le multiplexeur 90 sont remplacés par un unique diplexeur (2:1) dont les deux entrées sont reliées respectivement à l'antenne extérieure 2 et à l'antenne dédiée 8 et dont la sortie est reliée au câble coaxial.

Selon un autre mode de réalisation de l'invention, l'antenne de télévision extérieure 2 dédiée est montée sur un module d'asservissement d'orientation comprenant un moteur adapté pour modifier l'orientation de l'antenne en fonction de paramètres, tels que la puissance du signal radio-mobile reçu, le niveau de charge et/ou le trafic de la cellule de couverture du réseau radio-cellulaire dans laquelle se trouve l'antenne. Ces paramètres sont indiqués à titre indicatif et non limitatif. D'autres paramètres pourront bien évidemment être pris en considération pour optimiser la réception du signal LTE et/ou 5G et ainsi améliorer la couverture 4G et/ou 5G à l'intérieur du bâtiment.

Ce mode de réalisation est particulièrement bien adapté lorsque plusieurs antennes de télévision extérieures destinées à un même téléviseur 7 sont disposées sur le toit d'un immeuble. Dans ce cas, il est avantageux de dédier une des antennes de télévision extérieures à la réception de signaux radio-mobiles, par exemple de type LTE. Par exemple, le deuxième port de sortie 612 du diplexeur 6.1 n'est pas relié au téléviseur 7. Ainsi, le module de traitement 6 n'est pas destiné à être relié à un téléviseur mais jouera le rôle d'un répéteur ou point d'accès domestique comme décrit ci-avant.

## Revendications

1. Procédé de communication entre au moins une station de base (1.1, 1.2) d'un réseau radio-mobile, de préférence de type LTE ou 5G, et au moins un terminal (4) situé dans un espace confiné, ledit procédé comprenant:
a) réception (E1) par au moins une antenne de télévision extérieure (2, 8) audit espace confiné, dans une bande de fréquences UHF, notamment comprises entre 450 MHz et 960 MHz, d'une pluralité de signaux radiofréquences comprenant d'une part, au moins un signal radio-mobile (S 12) émis par ladite au moins une station de base (1.1, 1.2) du réseau radio-mobile, de préférence conformément au standard LTE ou 5G, ladite pluralité de signaux radiofréquences comprenant d'autre part au moins un signal de télévision (S82);
b) transmission (E2) de ladite pluralité de signaux radiofréquences (S 12, S82), par un lien de communication filaire (5), entre ladite au moins une antenne de télévision extérieure (2, 8) et un module de traitement (6; 6'; 6"; 61; 62; 63) desdits signaux radiofréquences situé à l'intérieur dudit espace confiné;
c) extraction (E3) par ledit module de traitement dudit au moins un signal radio-mobile (S 12);
d) diffusion (E10) à l'intérieur de l'espace confiné dudit au moins un signal radio-mobile extrait (S 12) par ledit module de traitement ; et
e) réception (E12) par le terminal (4) dudit signal diffusé ;
ledit procédé étant **caractérisé en ce que** le module de traitement (61) comprend :
- un routeur radiofréquence ;
- au moins un point d'accès sans fil (615) relié audit routeur ; et
- un modem radio-mobile (613) adapté à communiquer d'une part avec le réseau radio-mobile et d'autre part avec le routeur et ledit au moins un point d'accès sans fil (615), ledit modem radio-mobile (613) étant conçu pour recevoir au moins une carte SIM physique ou une carte SIM virtuelle dite e-SIM reprogrammable à distance.

2. Procédé selon la revendication 1, **caractérisé en ce qu'**il comprend en outre, entre l'étape c) et l'étape d), une étape de transposition de fréquence (E6), selon laquelle ledit au moins un signal radio-mobile extrait (S12) est transposé sur une fréquence différente de celle à laquelle ledit signal radio-mobile a été reçu, de manière à fournir au moins un signal transposé en fréquence (S'12), ladite étape de transposition (E6) étant effectuée par ledit module de traitement (6').

3. Procédé selon la revendication 2, **caractérisé en ce qu'**il comprend en outre, entre l'étape c) et l'étape d), une étape de conversion (E8), lors de laquelle ledit au moins un signal radio-mobile extrait (S 12) est converti selon un standard spécifique de manière à fournir au moins un signal converti (S* 12), ladite étape de conversion (E8) étant effectuée par ledit module de traitement (6").

4. Procédé selon l'une quelconque des revendications 1 à 3, **caractérisé en ce qu'**il comprend en outre, entre l'étape c) et l'étape d), une étape d'amplification (E4) lors de laquelle ledit au moins un signal radio-mobile extrait (S 12) est amplifié par ledit module de traitement (6.4).

5. Procédé selon l'une quelconque des revendications 1 à 4, **caractérisé en ce qu'**il comprend en outre :
e) une étape d'émission (E20) d'un signal radio-mobile (S'41) par ledit terminal (4) à destination d'au moins une station de base (1.2) du réseau radio-mobile ;
f) une étape de réception (E40), par la station de base (1.2) du signal radiofréquence (S'41) émis par le terminal (4).

6. Procédé selon l'une quelconque des revendications 1 à 4, **caractérisé en ce qu'**il comprend en outre :
g) une étape d'interception (E22) par ledit module de traitement d'un signal radiofréquence (S46) émis par ledit terminal (4) ;
h) une étape d'émission (E30), par ledit module de traitement, d'un signal radiofréquence (S61) obtenu à partir du signal radiofréquence reçu (S46) du terminal (4), à destination de ladite au moins une station de base (1.2) du réseau radio-mobile ;
i) une étape de réception (E40), par la station de base (1.2) du signal radiofréquence (S61) émis par le module de traitement.

7. Procédé selon la revendication 6, **caractérisé en ce qu'**il comprend en outre, entre l'étape g) et l'étape h), une étape d'amplification (E24; E29), lors de laquelle le signal radiofréquence reçu (S46) est amplifié par le module de traitement.

8. Procédé selon la revendication 6 ou 7, **caractérisé en ce qu'**il comprend en outre, entre l'étape g) et l'étape h), une étape de transposition de fréquence (E26), lors de laquelle le signal radiofréquence reçu (S46) est transposé sur une fréquence différente de celle à laquelle le signal radiofréquence a été reçu, ladite étape de transposition (E26) étant effectuée par ledit module de traitement.

9. Procédé selon la revendication 8, **caractérisé en ce qu'**il comprend en outre une étape de conversion (E28), lors de laquelle, le signal radiofréquence reçu (S46) est converti par ledit module de traitement selon le standard LTE ou 5G.

10. Procédé selon la revendication 2 ou 8, **caractérisé en ce que** la fréquence à laquelle ledit au moins un signal est transposé est allouée de manière dynamique par le module de traitement.

11. Procédé selon la revendication 4 ou 7, **caractérisé en ce que** l'amplification (E24, E29) est réalisée de manière dynamique par le module de traitement.

12. Système (100) pour la mise en oeuvre du procédé selon l'une quelconque des revendications 1 à 11, comprenant:
- au moins une station de base (1.1, 1.2) d'un réseau radio-mobile, ladite au moins une station de base étant apte à émettre et/ou recevoir des signaux radio-mobiles (S12 ; S41, S'41);
- au moins une antenne de télévision extérieure (2, 8) à un espace confiné, ladite au moins une antenne étant apte à recevoir des signaux radiofréquences (S82, S12; S82) dans une bande de fréquences UHF, notamment comprises entre 450 et 960 MHz;
- un module de traitement (6; 6'; 6"; 61; 62; 63) des signaux radiofréquences, ledit module de traitement étant installé dans l'espace confiné et comportant un moyen d'extraction (6.1) adapté pour extraire au moins un signal radio-mobile (S 12) parmi les signaux radiofréquences de ladite bande de fréquences UHF ainsi qu'une antenne (6.10 ; 6.10') apte à émettre et/ou recevoir un signal radiofréquence ;
- un lien de communication filaire (5) reliant ladite au moins une antenne de télévision extérieure (2, 8) audit module de traitement;
- au moins un terminal (4) apte à recevoir ou à émettre au moins un signal radiofréquence respectivement depuis ou vers ledit module de traitement, ledit au moins un terminal étant situé dans l'espace confiné ;
ledit système étant **caractérisé en ce que** le module de traitement (61) comprend :
- un routeur radiofréquence,
- au moins un point d'accès sans fil (615) relié audit routeur ; et
- un modem radio-mobile (613) adapté à communiquer d'une part avec le réseau radio-mobile et d'autre part avec le routeur et ledit au moins un point d'accès sans fil (615), ledit modem radio-mobile (613) étant conçu pour recevoir au moins une carte SIM physique ou une carte SIM virtuelle dite e-SIM reprogrammable à distance.

13. Système selon la revendication 12, **caractérisé en ce que** le moyen d'extraction (6.1) adapté pour extraire au moins un signal radio-mobile (S12) parmi les signaux radiofréquences de ladite bande de fréquences est choisi parmi : au moins un diplexeur (6.14), un triplexeur (6.12), un quadriplexeur ou une combinaison de ceux-ci.

14. Système selon la revendication 13, **caractérisé en ce que** ledit moyen d'extraction est un diplexeur (6.14).

15. Système selon la revendication 13, **caractérisé en ce que** ledit moyen d'extraction (6.1) adapté pour extraire au moins un signal radio-mobile (S12) parmi les signaux radiofréquences de ladite bande de fréquences comprend:
- un étage de séparation (6.20) incluant un port d'entrée et Q+K ports de sortie, ledit étage de séparation étant configuré pour répartir fréquentiellement les signaux (S12, S82) reçus de ladite au moins une antenne extérieure (2, 8) sur les ports de sortie ;
- un étage de combinaison (6.30, 6.40) comprenant un premier composant (6.30) incluant K ports d'entrée et un port de sortie, chaque port d'entrée dudit premier composant (6.30) étant relié à un port de sortie distinct de l'étage de séparation (6.20) de manière à combiner fréquentiellement plusieurs signaux reçus de ladite au moins une antenne extérieure (2, 8) sur un même port de sortie de l'étage de combinaison (6.30).

16. Système selon la revendication 13, **caractérisé en ce que** l'étage de séparation comprend un triplexeur 1:3 (6.12) et l'étage de combinaison comprend un diplexeur 2:1 (6.14).

17. Système selon la revendication 13, **caractérisé en ce que** l'étage de séparation comprend un quadriplexeur 1:4 et l'étage de combinaison comprend deux diplexeurs 2:1 (6.14a, 6.14b).

18. Système selon l'une quelconque des revendications 12 à 17, **caractérisé en ce que** le module de traitement (6; 61; 62; 63) comprend au moins un amplificateur de puissance (6.4) et/ou au moins un amplificateur à faible bruit (6.2) adapté pour amplifier le signal radio-mobile reçu d'au moins une desdites stations de base (1.1, 1.2).

19. Système selon l'une quelconque des revendications 12 à 18, **caractérisé en ce que** le module de traitement (6'; 61; 62; 63) comprend des moyens de transposition de fréquence (6.6; 615) adaptés à fournir au moins un signal transposé en fréquence à partir dudit signal radio-mobile reçu d'au moins une desdites stations de base (1.1, 1.2).

20. Système selon la revendication 18, **caractérisé en ce que** le module de traitement (6"; 61; 62) comprend en outre des moyens de traitement de signal (6.8) configurés pour convertir le signal radio-mobile reçu d'au moins une desdites stations de base (1.1, 1.2) selon un standard donné.

21. Système selon l'une quelconque des revendications 12 à 20, **caractérisé en ce que** le module de traitement (6'; 6"; 62) est mis en oeuvre au moins en partie selon une technologie de type radio logicielle.

## Patentansprüche

1. Kommunikationsverfahren zwischen mindestens einer Basisstation (1.1, 1.2) eines Mobilfunknetzes, bevorzugt vom Typ LTE oder 5G, und mindestens einem Endgerät (4), das sich in einem geschlossenen Raum befindet, wobei das Verfahren umfasst:
a) Empfangen (E1), durch mindestens eine Fernsehantenne (2, 8) außerhalb des geschlossenen Raums, in einem UHF-Frequenzband, insbesondere im Bereich zwischen 450 MHz und 960 MHz, einer Vielzahl von Funkfrequenzsignalen, die einerseits mindestens ein Mobilfunksignal (S12) umfassen, das von der mindestens einen Basisstation (1.1, 1.2) des Mobilfunknetzes, bevorzugt gemäß dem LTE- oder 5G-Standard, gesendet wird, wobei die Vielzahl von Funkfrequenzsignalen andererseits mindestens ein Fernsehsignal (S82) umfassen;
b) Übertragen (E2) der Vielzahl von Funkfrequenzsignalen (S12, S82) über eine drahtgebundene Kommunikationsverbindung (5) zwischen der mindestens einen äußeren Fernsehantenne (2, 8) und einem Verarbeitungsmodul (6; 6'; 6"; 61; 62; 63) für die Funkfrequenzsignale, das sich innerhalb des geschlossenen Raums befindet;
c) Extrahieren (E3) des mindestens einen Mobilfunksignals (S12) durch das Verarbeitungsmodul;
d) Ausstrahlen (E10) des mindestens einen durch das Verarbeitungsmodul extrahierten Mobilfunksignals (S12) innerhalb des geschlossenen Raums; und
e) Empfangen (E12) des ausgestrahlten Signals durch das Endgerät (4);
wobei das Verfahren **dadurch gekennzeichnet ist, dass** das Verarbeitungsmodul (61) umfasst:
- einen Funkfrequenz-Router;
- mindestens einen drahtlosen Zugangspunkt (615), der mit dem Router verbunden ist; und
- ein Mobilfunkmodem (613), das dazu geeignet ist, einerseits mit dem Mobilfunknetz und andererseits mit dem Router und dem mindestens einen drahtlosen Zugangspunkt (615) zu kommunizieren, wobei das Mobilfunkmodem (613) dafür konzipiert ist, mindestens eine physische SIM-Karte oder eine als e-SIM bezeichnete virtuelle SIM-Karte, die aus der Ferne neu programmiert werden kann, aufzunehmen.

2. Verfahren nach Anspruch 1, **dadurch gekennzeichnet, dass** es zwischen Schritt c) und Schritt d) weiter einen Schritt des Frequenzumsetzens (E6) umfasst, bei dem das mindestens eine extrahierte Mobilfunksignal (S12) auf eine andere Frequenz als die, auf der das Mobilfunksignal empfangen wurde, umgesetzt wird, um mindestens ein frequenzumgesetztes Signal (S'12) bereitzustellen, wobei der Schritt des Umsetzens (E6) vom Verarbeitungsmodul (6') durchgeführt wird.

3. Verfahren nach Anspruch 2, **dadurch gekennzeichnet, dass** es zwischen Schritt c) und Schritt d) weiter einen Schritt des Umwandelns (E8) umfasst, bei dem das mindestens eine extrahierte Mobilfunksignal (S12) gemäß einem spezifischen Standard umgewandelt wird, um mindestens ein umgewandeltes Signal (S*12) bereitzustellen, wobei der Schritt des Umwandelns (E8) vom Verarbeitungsmodul (6") durchgeführt wird.

4. Verfahren nach einem der Ansprüche 1 bis 3, **dadurch gekennzeichnet, dass** es zwischen Schritt c) und Schritt d) weiter einen Schritt des Verstärkens (E4) umfasst, bei dem das mindestens eine extrahierte Mobilfunksignal (S12) vom Verarbeitungsmodul (6.4) verstärkt wird.

5. Verfahren nach einem der Ansprüche 1 bis 4, **dadurch gekennzeichnet, dass** es weiter umfasst:
e) einen Schritt des Sendens (E20) eines Mobilfunksignals (S'41) durch das Endgerät (4) an mindestens eine Basisstation (1.2) des Mobilfunknetzes;
f) einen Schritt des Empfangens (E40) des vom Endgerät (4) gesendeten Funkfrequenzsignals (S'41) durch die Basisstation (1.2).

6. Verfahren nach einem der Ansprüche 1 bis 4, **dadurch gekennzeichnet, dass** es weiter umfasst:
g) einen Schritt des Abfangens (E22) eines vom Endgerät (4) gesendeten Funkfrequenzsignals (S46) durch das Verarbeitungsmodul;
h) einen Schritt des Sendens (E30) eines Funkfrequenzsignals (S61), das auf Grundlage des vom Endgerät (4) empfangenen Funkfrequenzsignals (S46) erhalten wurde, durch das Verarbeitungsmodul an die mindestens eine Basisstation (1.2) des Mobilfunknetzes;
i) einen Schritt des Empfangens (E40) des vom Verarbeitungsmodul gesendeten Funkfrequenzsignals (S61) durch die Basisstation (1.2).

7. Verfahren nach Anspruch 6, **dadurch gekennzeichnet, dass** es zwischen Schritt g) und Schritt h) weiter einen Schritt des Verstärkens (E24; E29) umfasst, bei dem das empfangene Funkfrequenzsignal (S46) vom Verarbeitungsmodul verstärkt wird.

8. Verfahren nach Anspruch 6 oder 7, **dadurch gekennzeichnet, dass** es zwischen Schritt g) und Schritt h) weiter einen Schritt des Frequenzumsetzens (E26) umfasst, bei dem das empfangene Funkfrequenzsignal (S46) auf eine andere Frequenz als die, auf der das Funkfrequenzsignal empfangen wurde, umgesetzt wird, wobei der Schritt des Umsetzens (E26) vom Verarbeitungsmodul durchgeführt wird.

9. Verfahren nach Anspruch 8, **dadurch gekennzeichnet, dass** es weiter einen Schritt des Umwandelns (E28) umfasst, bei dem das empfangene Funkfrequenzsignal (S46) vom Verarbeitungsmodul gemäß dem LTE- oder 5G-Standard umgewandelt wird.

10. Verfahren nach Anspruch 2 oder 8, **dadurch gekennzeichnet, dass** die Frequenz, auf die das mindestens eine Signal umgesetzt wird, vom Verarbeitungsmodul dynamisch zugewiesen wird.

11. Verfahren nach Anspruch 4 oder 7, **dadurch gekennzeichnet, dass** das Verstärken (E24, E29) vom Verarbeitungsmodul dynamisch ausgeführt wird.

12. System (100) zur Implementierung des Verfahrens nach einem der Ansprüche 1 bis 11, umfassend:
- mindestens eine Basisstation (1.1, 1.2) eines Mobilfunknetzes, wobei die mindestens eine Basisstation in der Lage ist, Mobilfunksignale (S12; S41, S'41) zu senden und/oder zu empfangen;
- mindestens eine Fernsehantenne (2, 8) außerhalb eines geschlossenen Raums, wobei die mindestens eine Antenne in der Lage ist, Funkfrequenzsignale (S82, S12; S82) in einem UHF-Frequenzband, insbesondere im Bereich zwischen 450 und 960 MHz, zu empfangen;
- ein Verarbeitungsmodul (6; 6'; 6"; 61; 62; 63) für die Funkfrequenzsignale, wobei das Verarbeitungsmodul in dem geschlossenen Raum installiert ist und ein Extraktionsmittel (6.1), das dazu geeignet ist, mindestens ein Mobilfunksignal (S12) aus den Funkfrequenzsignalen des UHF-Frequenzbandes zu extrahieren, sowie eine Antenne (6.10; 6.10') umfasst, die in der Lage ist, ein Funkfrequenzsignal zu senden und/oder zu empfangen;
- eine drahtgebundene Kommunikationsverbindung (5), die die mindestens eine äußere Fernsehantenne (2, 8) mit dem Verarbeitungsmodul verbindet;
- mindestens ein Endgerät (4), das in der Lage ist, mindestens ein Funkfrequenzsignal vom Verarbeitungsmodul zu empfangen bzw. an dieses zu senden, wobei sich das mindestens eine Endgerät in dem geschlossenen Raum befindet;
wobei das System **dadurch gekennzeichnet ist, dass** das Verarbeitungsmodul (61) umfasst:
- einen Funkfrequenz-Router,
- mindestens einen drahtlosen Zugangspunkt (615), der mit dem Router verbunden ist; und
- ein Mobilfunkmodem (613), das dazu geeignet ist, einerseits mit dem Mobilfunknetz und andererseits mit dem Router und dem mindestens einen drahtlosen Zugangspunkt (615) zu kommunizieren, wobei das Mobilfunkmodem (613) dafür konzipiert ist, mindestens eine physische SIM-Karte oder eine als e-SIM bezeichnete virtuelle SIM-Karte, die aus der Ferne neu programmiert werden kann, aufzunehmen.

13. System nach Anspruch 12, **dadurch gekennzeichnet, dass** das Extraktionsmittel (6.1), das dazu geeignet ist, mindestens ein Mobilfunksignal (S12) aus den Funkfrequenzsignalen des Frequenzbandes zu extrahieren, ausgewählt ist aus: mindestens einem Diplexer (6.14), einem Triplexer (6.12), einem Quadriplexer oder einer Kombination davon.

14. System nach Anspruch 13, **dadurch gekennzeichnet, dass** das Extraktionsmittel ein Diplexer (6.14) ist.

15. System nach Anspruch 13, **dadurch gekennzeichnet, dass** das Extraktionsmittel (6.1), das dazu geeignet ist, mindestens ein Mobilfunksignal (S12) aus den Funkfrequenzsignalen des Frequenzbandes zu extrahieren, umfasst:
- eine Trennstufe (6.20), die einen Eingangsanschluss und Q+K Ausgangsanschlüsse beinhaltet, wobei die Trennstufe dafür konfiguriert ist, die von der mindestens einen äußeren Antenne (2, 8) empfangenen Signale (S12, S82) frequenzmäßig auf die Ausgangsanschlüsse zu verteilen;
- eine Kombinationsstufe (6.30, 6.40), die eine erste Komponente (6.30) umfasst, die K Eingangsanschlüsse und einen Ausgangsanschluss beinhaltet, wobei jeder Eingangsanschluss der ersten Komponente (6.30) mit einem unterschiedlichen Ausgangsanschluss der Trennstufe (6.20) verbunden ist, um mehrere von der mindestens einen äußeren Antenne (2, 8) empfangene Signale frequenzmäßig auf demselben Ausgangsanschluss der Kombinationsstufe (6.30) zu kombinieren.

16. System nach Anspruch 13, **dadurch gekennzeichnet, dass** die Trennstufe einen 1:3-Triplexer (6.12) umfasst und die Kombinationsstufe einen 2:1-Diplexer (6.14) umfasst.

17. System nach Anspruch 13, **dadurch gekennzeichnet, dass** die Trennstufe einen 1:4-Quadriplexer umfasst und die Kombinationsstufe zwei 2:1-Diplexer (6.14a, 6.14b) umfasst.

18. System nach einem der Ansprüche 12 bis 17, **dadurch gekennzeichnet, dass** das Verarbeitungsmodul (6; 61; 62; 63) mindestens einen Leistungsverstärker (6.4) und/oder mindestens einen rauscharmen Verstärker (6.2) umfasst, der dazu geeignet ist, das von mindestens einer der Basisstationen (1.1, 1.2) empfangene Mobilfunksignal zu verstärken.

19. System nach einem der Ansprüche 12 bis 18, **dadurch gekennzeichnet, dass** das Verarbeitungsmodul (6'; 61; 62; 63) Frequenzumsetzungsmittel (6.6; 615) umfasst, die dazu geeignet sind, mindestens ein frequenzumgesetztes Signal auf Grundlage des von mindestens einer der Basisstationen (1.1, 1.2) empfangenen Mobilfunksignals bereitzustellen.

20. System nach Anspruch 18, **dadurch gekennzeichnet, dass** das Verarbeitungsmodul (6"; 61; 62) weiter Signalverarbeitungsmittel (6.8) umfasst, die dafür konfiguriert sind, das von mindestens einer der Basisstationen (1.1, 1.2) empfangene Mobilfunksignal gemäß einem gegebenen Standard umzuwandeln.

21. System nach einem der Ansprüche 12 bis 20, **dadurch gekennzeichnet, dass** das Verarbeitungsmodul (6'; 6"; 62) mindestens zum Teil nach einer Technologie vom Typ Software Defined Radio implementiert wird.

## Claims

1. A method of communication between at least one base station (1.1, 1.2) of a mobile-radio network, preferably of the LTE or 5G type, and at least one terminal (4) located in a confined space, said method comprising:
a) receiving (E1) by at least one television aerial (2, 8) external to said confined space, in a UHF frequency band, in particular between 450 MHz and 960 MHz, a plurality of radiofrequency signals comprising, on the one hand, at least one mobile-radio signal (S12) emitted by said at least one base station (1.1, 1.2) of the mobile-radio network, preferably in accordance with the LTE or 5G standard, said plurality of radiofrequency signals comprising on the other hand at least one television signal (S82);
b) transmitting (E2) said plurality of radiofrequency signals (S12, S82), via a wired communication link (5), between said at least one external television aerial (2, 8) and a processing module (6; 6'; 6"; 61; 62; 63) of said radiofrequency signals located within said confined space;
c) extracting (E3) said at least one mobile-radio signal (S12) by said processing module;
d) broadcasting (E10) said at least one mobile-radio signal (S12) extracted by said processing module within the confined space; and
e) receiving (E12) by the terminal (4) said broadcast signal,
said method being **characterised in that** the processing module (61) comprises :
- a radio frequency router ;
- at least one wireless access point (615) connected to said router; and
- a mobile radio modem (613) adapted to communicate on the one hand with the mobile radio network and on the other hand with the router and said at least one wireless access point (615), said mobile radio modem (613) being designed to receive at least one physical SIM card or a virtual SIM card known as an e-SIM that can be remotely reprogrammed.

2. The method according to claim 1, **characterized in that** it further comprises, between step c) and step d), a frequency transposition step (E6), according to which said at least one extracted mobile-radio signal (S12) is transposed to a frequency different from that at which said mobile-radio signal was received, so as to provide at least one frequency-transposed signal (S'12), said transposition step (E6) being carried out by said processing module (6').

3. The method according to claim 2, **characterized in that** it further comprises, between step c) and step d), a conversion step (E8), during which said at least one extracted mobile-radio signal (S12) is converted according to a specific standard so as to provide at least one converted signal (S*12), said conversion step (E8) being performed by said processing module (6").

4. The method according to any one of claims 1 to 3, **characterized in that** it further comprises, between step c) and step d), an amplification step (E4) during which said at least one extracted mobile-radio signal (S12) is amplified by said processing module (6.4).

5. The method according to any one of claims 1 to 4, **characterized in that** it further comprises:
e) a step of emitting (E20) a mobile-radio signal (S'41) by said terminal (4) to at least one base station (1.2) of the mobile-radio network;
f) a step of receiving (E40) by the base station (1.2) the radiofrequency signal (S'41) emitted by the terminal (4).

6. The method according to any one of claims 1 to 4, **characterized in that** it further comprises:
g) a step of intercepting (E22) by said processing module a radiofrequency signal (S46) emitted by said terminal (4);
h) a step of emitting (E30), by said processing module, a radiofrequency signal (S61) obtained from the radiofrequency signal received (S46) from the terminal (4), to said at least one base station (1.2) of the mobile-radio network;
i) a step of receiving (E40) by the base station (1.2) the radiofrequency signal (S61) emitted by the processing module.

7. The method according to claim 6, **characterized in that** it furthermore comprises, between step g) and step h), an amplification step (E24; E29), during which the received radiofrequency signal (S46) is amplified by the processing module.

8. The method according to claim 6 or 7, **characterized in that** it further comprises, between step g) and step h), a frequency transposition step (E26), during which the received radiofrequency signal (S46) is transposed to a frequency different from that at which the radiofrequency signal was received, said transposition step (E26) being carried out by said processing module.

9. The method according to claim 8, **characterized in that** it furthermore comprises a conversion step (E28), during which the received radiofrequency signal (S46) is converted by said processing module according to the LTE or 5G standard.

10. The method according to claim 2 or 8, **characterized in that** the frequency at which said at least one signal is transposed is dynamically allocated by the processing module.

11. The method according to claim 4 or 7, **characterized in that** the amplification (E24, E29) is carried out dynamically by the processing module.

12. A system (100) for carrying out the method according to any one of claims 1 to 11, comprising:
- at least one base station (1.1, 1.2) of a mobile-radio network, said at least one base station being able to emit and/or receive mobile-radio signals (S12; S41, S'41);
- at least one television aerial (2, 8) external to a confined space, said at least one aerial being able to receive radiofrequency signals (S82, S12; S82) in a UHF frequency band, in particular between 450 and 960 MHz;
- a module (6; 6'; 6"; 61; 62; 63) for processing radiofrequency signals, said processing module being installed in the confined space and comprising an extraction means (6.1) suited to extract at least one mobile-radio signal (S12) among the radiofrequency signals of said UHF frequency band, as well as an aerial (6.10; 6.10') suited to emit and/or receive a radiofrequency signal;
- a wired communication link (5) connecting said at least one television aerial (2, 8) external to said processing module;
- at least one terminal (4) capable of receiving or emitting at least one radiofrequency signal respectively from or to said processing module, said at least one terminal being located in the confined space,
said system being **characterised in that** the processing module (61) comprises :
- a radio frequency router,
- at least one wireless access point (615) connected to said router; and
- a mobile radio modem (613) adapted to communicate on the one hand with the mobile radio network and on the other hand with the router and said at least one wireless access point (615), said mobile radio modem (613) being designed to receive at least one physical SIM card or a virtual SIM card known as an e-SIM that can be remotely reprogrammed.

13. The system according to claim 12, **characterized in that** the extraction means (6.1) suited to extract at least one mobile-radio signal (S12) among the radiofrequency signals of said frequency band is selected from: at least one diplexer (6.14), one triplexer (6.12), one quadplexer or a combination thereof.

14. The system according to claim 13, **characterized in that** said extraction means is a diplexer (6.14).

15. The system according to claim 13, **characterized in that** said extraction means (6.1) suited to extract at least one mobile-radio signal (S12) among the radiofrequency signals of said frequency band comprises:
- a splitting stage (6.20) including an input port and Q+K output ports, said splitting stage being configured to frequentially split the signals (S12, S82) received from said at least one external aerial (2, 8) on the output ports;
- a combining stage (6.30, 6.40) comprising a first component (6.30) including K input ports and one output port, each input port of said first component (6.30) being connected to a separate output port of the splitting stage (6.20) so as to frequentially combine a plurality of signals received from said at least one external aerial (2, 8) on a same output port of the combining stage (6.30).

16. The system according to claim 13, **characterized in that** the splitting stage comprises a 1:3 triplexer (6.12) and the combining stage comprises a 2:1 diplexer (6.14).

17. The system according to claim 13, **characterized in that** the splitting stage comprises a 1:4 quadplexer and the combining stage comprises two 2:1 diplexers (6.14a, 6.14b).

18. The system according to any one of claims 12 to 17, **characterized in that** the processing module (6; 61; 62; 63) comprises at least one power amplifier (6.4) and/or at least one low noise amplifier (6.2) suited to amplify the mobile-radio signal received from at least one of said base stations (1.1, 1.2).

19. The system according to any one of claims 12 to 18, **characterized in that** the processing module (6'; 61; 62; 63) comprises frequency transposition means (6.6; 615) suited to provide at least one frequency-transposed signal from said mobile-radio signal received from at least one of said base stations (1.1, 1.2).

20. The system according to claim 18, **characterized in that** the processing module (6"; 61; 62) further comprises signal processing means (6.8) configured to convert the mobile-radio signal received from at least one of said base stations (1.1, 1.2) to a given standard.

21. The system according to any one of claims 12 to 20, **characterized in that** the processing module (6'; 6"; 62) is implemented at least in part according to a software-defined radio technology.
